(19) Europäisches Patentamt
European Patent Office
Office européen des brevets

(11) EP 3 595 121 A1

(12) EUROPÄISCHE PATENTANMELDUNG

(43) Veröffentlichungstag:
15.01.2020 Patentblatt 2020/03

(51) Int Cl.:
H02J 3/24 (2006.01)   F03D 9/00 (2016.01)
F03D 7/02 (2006.01)   F03D 9/25 (2016.01)

(21) Anmeldenummer: 19188000.4

(22) Anmeldetag: 03.07.2013

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 13.07.2012   DE 102012212364

(62) Dokumentnummer(n) der früheren Anmeldung(en)
nach Art. 76 EPÜ:
13732988.4 / 2 873 129

(71) Anmelder: Wobben Properties GmbH
26607 Aurich (DE)

(72) Erfinder:
• Diedrichs, Volker
18209 Bad Doberan (DE)
• Busker, Kai
26629 Großefehn (DE)
• Beekmann, Alfred
26639 Wiesmoor (DE)

(74) Vertreter: Eisenführ Speiser
Patentanwälte Rechtsanwälte PartGmbB
Postfach 10 60 78
28060 Bremen (DE)

Bemerkungen:
Diese Anmeldung ist am 24.07.2019 als
Teilanmeldung zu der unter INID-Code 62 erwähnten
Anmeldung eingereicht worden.

(54) **VERFAHREN UND VORRICHTUNG ZUM EINSPEISEN ELEKTRISCHER ENERGIE IN EIN ELEKTRISCHES VERSORGUNGSNETZ**

(57) Die Erfindung betrifft ein Verfahren zum Steuern eines an einem Netzanschlusspunkt (2) an ein elektrisches Versorgungsnetz (4) angeschlossenen Erzeugers (1) elektrischer Energie, umfassend die Schritte Aufnehmen wenigstens einer auf den Netzanschlusspunkt (2) bezogenen Netzeigenschaft des elektrischen Versorgungsnetzes (4), Steuern des Erzeugers (1) so, dass er in Abhängigkeit der aufgenommenen Netzeigenschaft Strom in das elektrische Versorgungsnetz (4) einspeist.

Fig. 4

EP 3 595 121 A1

**Beschreibung**

Die vorliegende Erfindung betrifft ein Verfahren zum Steuern eines an einem Netzanschlusspunkt an ein elektrisches Versorgungsnetz angeschlossenen Erzeugers elektrischer Energie. Weiterhin betrifft die vorliegende Erfindung einen solchen Erzeuger elektrischer Energie.

Das Einspeisen elektrischer Energie in ein elektrisches Versorgungsnetz, wie bspw. das europäische Verbundnetz, oder das US-amerikanische Stromnetz, sind allgemein bekannt. Dabei wird nachfolgend unter einem elektrischen Versorgungsnetz ein Wechselspannungsnetz verstanden, wie es sich allgemein durchgesetzt hat. Das schließt nicht aus, dass Gleichspannungsabschnitte im Netz vorhanden sind. Ebenso können jedenfalls Aspekte, die frequenzunabhängig sind grundsätzlich auch auf ein Gleichspannungsnetz beziehen. Historisch erfolgt eine Einspeisung in ein elektrisches Versorgungsnetz mit einem Großkraftwerk, das aus Primärenergie, wie z.B. Kohle, Kernenergie oder Gas, einen Synchrongenerator antreibt. Abhängig von der Polpaarzahl des Synchrongenerators und der Drehzahl des Synchrongenerators speist dieser mit einer bestimmten Frequenz in das Versorgungsnetz ein. Der Synchrongenerator kann steuerungstechnisch beeinflusst werden, um bspw. die Leistung einzustellen. Ein solcher Verstellprozess kann aber langsam sein.

Bei sich verändernden Situationen in dem einzuspeisenden Versorgungsnetz beeinflusst oftmals, jedenfalls kurzfristig die physikalische Reaktion des Synchrongenerators eine Änderung eines Netzzustandes. Bspw. erhöht sich die Drehzahl des Synchrongenerators, wenn das Versorgungsnetz die vom Synchrongenerator bereitgestellte bzw. bereitstellbare Leistung nicht vollständig abnehmen kann. Die somit überschüssige Leistung beschleunigt dann den Synchrongenerator, was sich in einer Erhöhung der Einspeisefrequenz bemerkbar macht. Entsprechend kann sich die Frequenz im Versorgungsnetz erhöhen.

Bei der Einspeisung in ein Versorgungsnetz ist zudem die Netzstabilität zu berücksichtigen. Der Verlust der Netzstabilität, also der Verlust der Stabilität des Versorgungsnetzes, kann zum Abschalten des einspeisenden Erzeugers führen. Ein solcher Stabilitätsverlust, der auch im deutschen Sprachgebrauch in der Fachwelt mit "Loss of Stability" bezeichnet und mit "LOS" abgekürzt wird, beschreibt Vorgänge physikalischer Natur, welche einen Weiterbetrieb nicht mehr zulassen und durch Abschaltungen beendet werden müssen. Im Falle von Kraftwerken fällt deren Leistung danach aus und kann dadurch zu einer Eskalierung von sog. Defizitleistung beitragen. Im schlimmsten Fall führt dieser Stabilitätsverlust zum Totalausfall eines Energiesystems in Folge von Fehlerkaskadierung und Defizitakkumulation. Solche Totalausfälle sind äußerst selten, aber bspw. am 24. September 2004 in Italien eingetreten.

Unter dem Verlust der Netzstabilität, der sog. Loss of Stability, ist ein Phänomen zu verstehen, bei dem zunächst eine Winkelstabilität verloren geht, was schließlich zu dem Verlust einer Spannungsstabilität führen kann.

Als Stabilitätskriterien werden insbesondere zu erreichende Überströme festgelegt, welche im Fall des Auftretens eines Stabilitätsverlustes bereitgestellt werden können müssen. Dies setzt eine entsprechende Auslegung der Systeme voraus. Ein neues Kraftwerk, insbesondere ein neu zu bauendes Kraftwerk wird somit auf das Versorgungsnetz abgestimmt, wie es sich an dem Netzanschlusspunkt darstellt, an den das Kraftwerk angeschlossen werden soll.

Ein wichtiges Kriterium beim Anschließen von Großkraftwerken an ein elektrisches Versorgungsnetz ist das Kurzschlussstromverhältnis, das auch im deutschen Sprachgebrauch in Fachkreisen als "Short circuit ratio" bezeichnet und mit "Scr" abgekürzt wird. Dieses Kurzschlussstromverhältnis ist das Verhältnis der Kurzschlussleistung zur Anschlussleistung. Hierbei wird unter Kurzschlussleistung diejenige Leistung verstanden, die das betreffende Versorgungsnetz an dem betrachteten Netzanschlusspunkt, an dem das Kraftwerk angeschlossen werden soll, bereitstellen kann, wenn dort ein Kurzschluss auftritt. Die Anschlussleistung ist die Anschlussleistung des anzuschließenden Kraftwerks, insbesondere also die Nennleistung des anzuschließenden Generators.

Um einen sicheren Betrieb zu gewährleisten, um also einen Stabilitätsverlust - eine Loss of Stability - weitestgehend auszuschließen, werden Kraftwerke üblicherweise so für den betreffenden Netzanschlusspunkt ausgelegt, dass das Kurzschlussstromverhältnis über dem Wert 10, üblicherweise sogar über dem Wert 15, liegt. Das Versorgungsnetz kann dann also eine vergleichsweise hohe Kurzschlussleistung am Netzanschlusspunkt bereitstellen. Das bedeutet, dass das Netz eine geringe Netzimpedanz aufweist und als starkes Netz bezeichnet wird.

Im Falle eines schwachen Netzes, wenn also eine hohe Netzimpedanz vorliegt, kann entsprechend nur mit einer kleinen Anschlussleistung eingespeist werden bzw. es kann nur ein Kraftwerk mit einer kleinen Anschlussleistung angeschlossen werden. Dies führt üblicherweise dazu, dass entweder an einem solchen Netzanschlusspunkt ein neues Kraftwerk nicht angeschlossen wird oder dass das Netz insbesondere durch Vorsehen weiterer, leistungsfähiger Leitungen verändert werden muss. Das wird auch im Allgemeinen als Netzverstärkung bezeichnet.

Für das Einspeisen elektrischer Energie durch dezentrale Erzeugungseinheiten, wie insbesondere Windenergieanlagen, ist das Problem des Stabilitätsverlustes des Netzes, nämlich der sog. Loss of Stability, im Grunde unbekannt. Zwar sind bereits Ende der 90er Jahre erstmals Vorschläge gemacht worden, auch Windenergieanlagen zur elektrischen Stützung des Netzes beitragen zu lassen, jedoch berücksichtigt dies nicht die Ursache eines Stabilitätsverlustes, insbesondere ein Verursachen eines Stabilitätsverlustes durch das Einspeisen in das Versorgungsnetz.

So beschreibt bspw. die deutsche Patentanmeldung US 6,891,281 ein Verfahren, bei dem Windenergieanlagen abhängig von der Netzfrequenz ihre Leistungseinspeisung ändern, insbesondere drosseln können. Die US 7,462,946 schlägt vor, dass im Falle einer Netzstörung, nämlich insbesondere im Falle eines Kurzschlusses, eine Windenergieanlage den Strom, den sie einspeist, begrenzt, statt sich vom Netz zu trennen, um auch hierdurch eine Netzstützung zu erreichen. Aus der US 6,965,174 wird zur Netzstützung durch eine Windenergieanlage ein Verfahren beschrieben, das in Abhängigkeit der Netzspannung einen Phasenwinkel des eingespeisten Stroms einstellt und damit spannungsabhängig Blindleistung in das Netz einspeist um hierdurch das Netz zu stützen. Die US 6,984,898 betrifft ebenfalls ein Verfahren zur Netzstützung mittels einer Windenergieanlage, bei dem die Windenergieanlage ggf. abhängig von der Netzspannung die ins Netz einzuspeisende Leistung reduziert, um hierdurch insbesondere eine Trennung vom Netz zu vermeiden, um auch hierdurch eine Stützung des Netzes durch eine Windenergieanlage zu erreichen.

Dass solche dezentralen Erzeugungseinheiten, wie Windenergieanlagen, die eigentliche Ursache für den Stabilitätsverlust im Netz - die Loss of Stability - sein können, ist nicht berücksichtigt worden. In dem Aufsatz "Loss of (Angle) Stability of Wind Power Plants" von V. Diedrichs et al., eingereicht für und vorgetragen auf dem "10th International Workshop on Large-Scale Integration of Wind Power into Power Systems as well as on Transmission Networks for Offshore Wind Farms, Aarhus (Denmark), 25 - 26 October 2011". Dort wurde grundsätzlich auf das Problem hingewiesen, dass der Stabilitätsverlust im Netz - die Loss of Stability - grundsätzlich auch für an das Versorgungsnetz zum Einspeisen angeschlossene Windenergieanlagen auftreten kann. Dieser Aufsatz stellt dabei im Wesentlichen eine Sensibilisierung für das Problem dar. Auf diesen Aufsatz wird ausdrücklich Bezug genommen und sein Inhalt, insbesondere seine technischen Erläuterungen gelten auch für die vorliegende Anmeldung.

Grundsätzlich sind Erkenntnisse, Erfahrungen oder anderes Wissen vom Anschluss und Betrieb von Großkraftwerken am elektrischen Versorgungsnetz auf Windenergieanlagen, einschließlich großer Windparks mit vielen Windenergieanlagen, die an das Versorgungsnetz zum Einspeisen angeschlossen sind, nicht übertragbar. Bereits der zuständige Fachmann, der ein Kraftwerk an ein Versorgungsnetz anschließt und daran betreiben will, ist ein anderer als der Fachmann, der eine Windenergieanlage an das Versorgungsnetz anschließen und daran betreiben will. Windenergieanlagen - und vieles des Folgenden gilt auch für andere dezentrale Erzeugungseinheiten - sind vom Wind abhängig und müssen somit eine schwankende Energiequelle berücksichtigen; sie speisen üblicherweise nicht mit einem direkt mit dem Netz gekoppelten Synchrongenerator in das Versorgungsnetz ein, sondern verwenden einen spannungsbasierten Wechselrichter; sie weisen eine andere Größenordnung auf als Großkraftwerke, wobei ihre Nennleistung üblicherweise um etwa 3 Zehnerpotenzen unter der eines Großkraftwerks liegen; sie unterliegen üblicherweise andere politischen Gesetzen, die ihnen häufig eine Abnahme der Leistung durch die Betreiber elektrischer Versorgungsnetze zusichern; sie sind üblicherweise dezentral aufgestellt; sie speisen üblicherweise in ein Mittelspannungsnetz ein, wohingegen Großkraftwerke üblicherweise in ein Höchstspannungsnetz einspeisen.

Das Deutsche Patent- und Markenamt hat in der Prioritätsanmeldung zu vorliegender Anmeldung folgenden Stand der Technik recherchiert: DE 10 2011 053 237 A1, WO 2010/060903 A1, US 2010/0148508 A1, DE 10 2007 044 601 A1, DE 10 2007 018 888 A1, US 2010/0237834 A1 sowie den Artikel von Volker Diedrichs et al., "Loss of (Angle) Stability of Wind Power Plants - The Underestimated Phenomenon in Case of Very Low Short Circuit Ratio -".

Der vorliegenden Erfindung liegt somit die Aufgabe zugrunde, zumindest eines der o.g. Probleme zu adressieren. Insbesondere soll eine Lösung vorgeschlagen werden, bei der dezentrale Erzeugungseinheiten wie Windenergieanlagen so betrieben werden können, dass sie das Phänomen des Stabilitätsverlustes des Versorgungsnetzes berücksichtigen. Insbesondere soll eine Lösung vorgeschlagen werden, bei der dezentrale Versorgungseinheiten wie Windenergieanlagen oder Windparks einen Beitrag zur Netzstabilität derart leisten, dass das Auftreten eines Netzstabilitätsverlustes - dem Auftreten einer Loss of Stability - entgegengewirkt wird. Zumindest soll eine alternative Lösung geschaffen werden.

Erfindungsgemäß wird ein Verfahren nach Anspruch 1 vorgeschlagen. Demnach wird ein Erzeuger elektrischer Energie, der an einem Netzanschlusspunkt an ein elektrisches Versorgungsnetz angeschlossen ist, gesteuert. Rein vorsorglich wird darauf hingewiesen, dass ein Erzeuger elektrischer Energie tatsächlich vorhandene Energie in elektrische Energie umwandelt, was hier vereinfachend als Erzeugen bezeichnet wird. Gemäß dem vorgeschlagenen Steuerverfahren wird zunächst wenigstens eine auf den Netzanschlusspunkt bezogene Netzeigenschaft des elektrischen Versorgungsnetzes aufgenommen. Die hier aufgenommene Netzeigenschaft ist insbesondere das Verhalten des Netzes hinsichtlich Stabilität bei unterschiedlichen Betriebszuständen des Netzes und/oder bei unterschiedlichen Einspeisebedingungen oder Einspeiserandbedingungen. Es werden insbesondere Netzeigenschaften aufgenommen, die das Verhalten des Versorgungsnetzes bei Abweichungen vom nominalen Arbeitspunkt beschreiben.

Ferner wird vorgeschlagen, basierend auf dieser aufgenommenen Netzeigenschaft elektrischen Strom in das elektrische Versorgungsnetz einzuspeisen. Somit hängt die Steuerung der Einspeisung von der vorab bestimmten Netzeigenschaft ab. Dies ist zu unterscheiden von der systemtechnischen Auslegung des Erzeugers, bei der die Steuerung die aufgenommenen Netzeigenschaften nicht berücksichtigt. Die Steuerung der Einspeisung in Abhängigkeit der aufgenommenen Netzeigenschaften ist auch zu unterscheiden von einer Steuerung abhängig von aktuellen Netzzuständen. Gleichwohl ist es auch hier vorteilhaft, zusätzlich zu der Steuerung der Einspeisung in Abhängigkeit der aufgenommenen Netzeigenschaft auch den Erzeuger abhängig der aufgenommenen Netzeigenschaft auszulegen und

3

auch die Steuerung abhängig von Netzzuständen vorzunehmen, was jedoch nicht vorrangig Gegenstand dieser Anmeldung ist.

Erfindungsgemäß wurde nämlich erkannt, dass insbesondere eine Berücksichtigung der Netzeigenschaft für die Auslegung des angeschlossenen oder anzuschließenden Erzeugers eine unvollständige Berücksichtigung sein kann. Dies gilt insbesondere für dezentrale Versorgungseinheiten bzw. dezentrale Erzeuger, die die Fähigkeit mitbringen, sich dynamisch an neue Situationen anzupassen. Eine Anpassung an neue Situationen, also an geänderte Zustände im Versorgungsnetz birgen andererseits die Gefahr, etwaigen aktuellen Problemen im Versorgungsnetz nur hinterherzulaufen. Erst durch die Berücksichtigung wenigstens einer, vorab aufgenommener Netzeigenschaft kann vielmehr auch vorausschauend das Einspeisen elektrischen Stroms in das elektrische Versorgungsnetz gesteuert werden. Eine solche vorausschauende Steuerung hat insbesondere das Vermeiden oder zumindest frühzeitige Erkennen von Stabilitätsproblemen im Versorgungsnetz, insbesondere von einem Stabilitätsverlust, einer sog. Loss of Stability, zum Ziele.

Vorzugsweise wird dieses Steuerverfahren für einen sog. dezentralen Erzeuger und/oder eine Windenergieanlage oder einen mehrere Windanlagen umfassenden Windpark vorgeschlagen. Eine Windenergieanlage ist üblicherweise ein dezentraler Erzeuger, weil sie an dezentralen Stellen aufgestellt wird, die sich insbesondere nach dem Windangebot richten, und weil sie von ihrer Anschlussleistung her im Vergleich zu Großkraftwerken nicht als zentrale Energiequelle angesehen werden kann. Ähnliches gilt üblicherweise auch für einen Windpark mit mehreren Windenergieanlagen. Außerdem werden Windenergieanlagen und zumindest auch kleinere Windparks im Wesentlichen an ein bestehendes Versorgungsnetz angeschlossen. Möglicherweise wird eine Verbindungsleitung oder mehrere Verbindungsleitungen zum Anschließen an dieses Versorgungsnetz vorgesehen, die Grundstruktur des Versorgungsnetzes bleibt jedoch üblicherweise bestehen.

Bisher wurde davon ausgegangen, dass das Anschließen solcher dezentraler Erzeuger auf die Grundeigenschaft und die grundsätzliche Struktur des jeweiligen Versorgungsnetzes keinen nennenswerten Einfluss hat. Überprüft wurde, ob die jeweiligen Netzkapazitäten zum Anschluss des dezentralen Versorgers ausreichen, ob sie also insbesondere ausreichen, die durch den dezentralen Erzeuger zu erwartende einzuspeisende Leistung zusätzlich zu transportieren. Insbesondere Aspekte der Netzstabilität durch das Einspeisen dieses Erzeugers haben praktisch keine Beachtung gefunden. Insbesondere ist bei solchen dezentralen Erzeugern nicht berücksichtigt worden, inwieweit das Einspeisen elektrischer Energie durch sie einen Stabilitätsverlust des Versorgungsnetzes auslösen könnte. Das vorliegende Verfahren ist daher insbesondere auch für solche dezentralen Versorger, insbesondere auch Windenergieanlagen und Windparks gerichtet.

Vorzugsweise erfolgt das Einspeisen, insbesondere mittels dezentraler Erzeuger, mittels eines Spannungswechselrichters. Bei einer solchen Einspeisung mittels eines Spannungswechselrichters wird ein Wechselrichter verwendet, dem die einzuspeisende Energie bereitgestellt wird, z.B. an einem Gleichspannungszwischenkreis, und der Spannungswechselrichter erzeugt hieraus ein insbesondere möglichst sinusförmiges Spannungswechselsignal. Dieses Spannungswechselsignal wird häufig unter Verwendung einer Netzdrossel zu einem entsprechenden in das Versorgungsnetz einzuspeisenden Strom führen. Es können weitere Spannungstransformationen durch einen oder mehrere Transformatoren vorgesehen sein.

Hierbei wird insbesondere ein sog. Vollumrichterkonzept vorgeschlagen, bei dem die gesamte einzuspeisende elektrische Leistung, Verluste werden hierbei vernachlässigt, durch diesen Spannungswechselrichter in das Versorgungsnetz eingespeist wird. Es kommen bei Windenergieanlagen aber auch andere Konzepte mit Spannungswechselrichter in Betracht, bei denen der Spannungswechselrichter die Einspeisung elektrischen Stroms indirekt über die Ansteuerung eines den Strom erzeugenden Generators, insbesondere vom Typ einer doppelt gespeisten Asynchronmaschine steuert.

Die Verwendung eines Spannungswechselrichters zum Einspeisen elektrischen Stroms eines Versorgungsnetzes, insbesondere nach dem Vollumrichterkonzept, unterscheidet sich von dem Einspeisen elektrischen Stroms durch ein Großkraftwerk essentiell. Der Spannungswechselrichter kann und/oder muss ständig abhängig vom Netzzustand, insbesondere Spannungsamplitude und Frequenz seiner Einspeisung anpassen. Hieraus ergibt sich gleichzeitig die Fähigkeit, schnell auf Veränderungen im Netz zu reagieren. Hierbei ergibt sich gleichzeitig die Gefahr, schnell in einen instabilen Zustand zu gelangen, wenn diese schnelle Reaktion falsch durchgeführt wird. Insbesondere diese Problematik wird mit dieser Erfindung adressiert.

Gemäß einer Ausführungsform wird vorgeschlagen, dass der Erzeuger so gesteuert wird, dass er in einem Arbeitspunkt betrieben wird, der von den aufgenommenen Netzeigenschaften abhängt. Insbesondere hängt er nicht nur von diesen aufgenommenen Netzeigenschaften ab, sondern auch von der Spannungsamplitude und der Frequenz im Versorgungsnetz, nämlich insbesondere am bzw. in der Nähe des Netzanschlusspunktes. Weiterhin kann sie abhängen von der momentan eingespeisten Wirkleistung und/oder der momentan eingespeisten Blindleistung. Es ergibt sich also zunächst ein nominaler Arbeitspunkt, der für diesen Netzanschlusspunkt mit der entsprechenden aufgenommenen Netzeigenschaft und für den konkreten Erzeuger ausgelegt ist. Verändern sich nun Zustände des Netzes oder der Einspeisung, kann ein anderer Arbeitspunkt gewählt werden, der dabei die zuvor aufgenommene Netzeigenschaft berücksichtigt. Der Arbeitspunkt des Erzeugers an dem Netzanschlusspunkt wird vorzugsweise durch die Wirkleistung und/oder die Blindleistung angegeben, die der Erzeuger in das Versorgungsnetz einspeist.

Gemäß einer Ausführungsform wird vorgeschlagen, dass zum Einstellen des Arbeitspunktes wenigstens eine von der aufgenommenen Netzeigenschaft abhängige Steuerkennlinie zugrundegelegt wird. Eine solche Steuerkennlinie kann auch mehrdimensional sein, also von mehreren Eingangsparametern abhängen und/oder mehrere Parameter zum Einstellen jeweils gleichzeitig umfassen. Insbesondere gibt die Steuerkennlinie in Abhängigkeit der Netzspannung am Netzanschlusspunkt die einzuspeisende Blindleistung und/oder die einzuspeisende Wirkleistung vor. Die Steuerkennlinie wird basierend auf der wenigstens einen aufgenommenen Netzeigenschaft erstellt. Insbesondere wird die Kennlinie so gewählt, dass der Betrieb des Erzeugers möglichst nicht zu einem Stabilitätsverlust des Versorgungsnetzes führt.

Es ist gemäß einem Vorschlag vorgesehen, einen nichtlinearen Regler einzusetzen, insbesondere einen Regler mit nichtlinearer und/oder nichtstetiger Reglercharakteristik. Insbesondere wird vorgeschlagen, einen PID-Regler als ausschließlichen Regler zu vermeiden. Es wurde erkannt, dass ein PID-Regler für manche Anforderungen nicht ausreicht und auch bei optimaler Parametrierung den Anforderungen nicht gerecht wird. Durch einen nichtlinearen Regler kann eine bessere Anpassung an das zu regelnde System erreicht werden. Als nichtlinearer Regler kommt bspw. ein Fuzzy-Regler, ein auf ein neuronales Netz gestützter Regler, ein multiplizierender Regler, ein eine Hysterese-Funktion beinhaltender Regler und/oder ein eine Totzeitcharakteristik verwendender Regler in Betracht.

Gemäß einer Ausgestaltung wird eine Regelung eingesetzt, die dazu führt, dass sich der Arbeitspunkt jeweils auf der Steuerkennlinie einstellt. Eine solche Steuerkennlinie kann beispielsweise die eingespeiste Blindleistung $Q$ in Abhängigkeit der eingespeisten Wirkleistung $P$ und der Spannung $U$ im Netz angeben, wie die Formel $Q=f(P,U)$ beschreibt. Vorzugsweise umfasst die Aufnahme der wenigstens einen Netzeigenschaft, die auch durch Berechnen der Netzeigenschaften vorgenommen werden kann, die Aufnahme eines Zusammenhangs zwischen eingespeister Blindleistung und einer Netzspannung am Netzanschlusspunkt. Zusätzlich oder alternativ umfasst die Aufnahme eines Zusammenhangs zwischen eingespeister Wirkleistung und der Netzspannung am Netzanschlusspunkt. Vorzugsweise umfasst sie die Aufnahme eines Zusammenhangs zwischen eingespeister Wirkleistung, eingespeister Blindleistung und der Netzspannung am Netzanschlusspunkt, so dass in diesem Fall ein dreidimensionaler Zusammenhang aufgenommen wird. Hierdurch wird ein Zusammenhang zwischen Blindleistung, Wirkleistung und Netzspannung am Netzanschlusspunkt aufgenommen, der Rückschlüsse auf das Verhalten des Versorgungsnetzes bezogen auf diesen Netzanschlusspunkt zulässt und als Grundlage für die Steuerung des Versorgers beim Einspeisen in das Versorgungsnetz dienen kann.

Gemäß einer Ausführungsform wird vorgeschlagen, dass das Aufnehmen der Netzeigenschaft das Aufnehmen einer Stabilitätsgrenze umfasst. Eine solche Stabilitätsgrenze kann als Funktion der Netzspannung am Netzanschlusspunkt in Abhängigkeit einer eingespeisten Blindleistung und in Abhängigkeit der eingespeisten Wirkleistung angegeben werden. Diese Grenze definiert sich somit über drei Parameter und kann entsprechend auch in einer dreidimensionalen Darstellung veranschaulicht werden. In einer solchen dreidimensionalen Darstellung spannt die Stabilitätsgrenze im Grunde eine gekrümmte oder gewölbte Fläche auf, nämlich eine Grenzfläche. Entsprechend werden die jeweiligen Arbeitspunkte und somit auch die durch Arbeitspunkte vorgebende Kennlinie auf der stabilen Seite der Stabilitätsgrenze gewählt. Auch je nach zu erwartender Dynamik des Versorgungsnetzes und/oder des Erzeugers und damit im Falle einer Windenergieanlage auch des Windes, kann ein großer oder kleiner Abstand des jeweiligen Arbeitspunktes von der Stabilitätsgrenze gewählt werden.

Gemäß einer Ausführungsform wird vorgeschlagen, dass die wenigstens eine aufgenommene Netzeigenschaft über ein Modell berechnet wird. Hierfür wird zunächst von dem Versorgungsnetz eine Netzanalyse vorgenommen, die bspw. das Leitungssystem, im Versorgungsnetz enthaltene Transformatoren, Schalteinrichtungen, Verbraucher und Erzeuger berücksichtigt. Ein Transformator kann nachfolgend vereinfachend auch als Trafo bezeichnet werden. Insbesondere werden deren Werte in einem Berechnungsprogramm oder Simulationsprogramm eingegeben. Die Netzanalyse wird gezielt für den vorhandenen oder geplanten Netzanschlusspunkt vorgenommen. Insoweit kann eine Vernachlässigung einzelner Elemente bei der Netzanalyse erfolgen, soweit diese augenscheinlich für den Netzanschlusspunkt keine signifikante Relevanz mehr haben. Es können entsprechende Netzabschnitte durch Ersatzmodelle, insbesondere unter Verwendung von Ersatzimpedanzen berücksichtigt werden. Aus der Netzanalyse wird dann ein Model des Versorgungsnetzes erstellt, das mit einer entsprechenden Software für ein Netzanalysemodell bearbeitet und getestet werden kann. Dann wird, insbesondere mit einer solchen Analysesoftware, basierend auf dem Netzmodell für den konkreten Netzanschlusspunkt eine Simulation unterschiedlicher Betriebspunkte vorgenommen und die Simulationsergebnisse aufgezeichnet. Das Ergebnis der Simulation ist die wenigstens eine aufgenommene Netzeigenschaft. Insbesondere wird hierfür die Vielzahl der simulierten einzelnen Arbeitspunkte erfasst oder zu Grunde gelegt.

Es wird darauf hingewiesen, dass für den Begriff "Versorgungsnetz" auch synonym der vereinfachte Begriff "Netz " oder "Netzwerk" verwendet werden kann.

Vorzugsweise wird auch die Stabilitätsgrenze, die sich bspw. aus obiger Simulation ergibt, in einer Tabelle hinterlegt. Zusätzlich oder alternativ kann sie auch mit einer analytischen Funktion angenähert werden. Nicht aufgenommene Zwischenwerte können auch durch Interpolation bestimmt werden.

Gemäß einer Ausgestaltung wird vorgeschlagen, dass bei der Aufnahme der wenigstens einen Netzeigenschaft auch Eigenschaften oder zumindest eine Eigenschaft des Erzeugers berücksichtigt werden bzw. wird und ein Kurzschlussstromverhältnis aufgenommen wird. Die Netzeigenschaften des Anschlussknotens werden somit auch unter Berücksichtigung der Eigenschaften des Erzeugers an diesem Netzanschluss aufgenommen. Vorzugsweise wird dabei vorgeschlagen, dass der Erzeuger bei einem Kurzschlussstromverhältnis von weniger als 6 gesteuert wird. Vorzugsweise ist das Kurzschlussstromverhältnis hierbei kleiner als 4 und insbesondere ist es kleiner als 2. Somit wird ein Steuerverfahren für ein Kurzschlussstromverhältnis vorgeschlagen, das kleiner als sonst üblich ist. Dies setzt häufig auch voraus, dass gezielt eine solche Auslegung vorgenommen oder zumindest akzeptiert wird. Es wird nämlich bewusst eine Einspeisung in ein schwaches Netz vorgeschlagen, nämlich insbesondere mit einem Generator, dessen Anschlussleistung im Vergleich zur Kurschlussleistung des Netzes bezogen auf den Anschlusspunkt groß ist, nämlich größer als ein Sechstel, größter als ein Viertel oder sogar größer als die halbe Kurschlussleistung des Netzes für diesen Anschlusspunkt. Es wurde dabei erkannt, dass jedenfalls die Verwendung einer Windenergieanlage mit einem Spannungsquellenumrichter daraus vereinfachend als Spannungsumrichter bezeichnet werden kann, insbesondere mit einer Vollumrichterstruktur, diesen Betrieb in einem schwachen Netz ermöglicht. Dabei wird bewusst in Kauf genommen, dass durch Wahl bzw. durch Akzeptieren eines geringen Kurzschlussstromverhältnisses ein Betrieb in der Nähe einer Stabilitätsgrenze durchgeführt wird. Es wurde erkannt, dass eine Regelung mit einem Spannungsumrichter eine entsprechende Regelung, insbesondere entsprechend schnelle und entsprechend präzise Regelung des Einspeisens gewährleisten kann. Hierdurch kann somit erreicht werden, dass bisher als ungeeignet betrachtete Netzanschlusspunkte nun zum Anschließen eines Erzeugers genutzt werden können.

Gemäß einer Ausgestaltung wird vorgeschlagen, dass der Arbeitspunkt des Erzeugers mit einer vorbestimmten Stabilitätsreserve zu der Stabilitätsgrenze gewählt wird. Insoweit wird nun eine konkrete Wahl des Arbeitspunktes vorgeschlagen, um eine Stabilität zu gewährleisten. Dieses unterscheidet sich insbesondere von einem Konzept, bei dem eine Auslegung mit einem sehr hohen Kurzschlussstromverhältnis vorgenommen wird, wodurch eine konkrete Arbeitspunktwahl nicht vorgenommen wurde. Anders ausgedrückt wird eine übervorsichtige Auslegung vermieden. Der Arbeitspunkt wird in einer bestimmten Stabilitätsreserve gewählt und dabei während der Steuerung mit dieser Stabilitätsreserve geführt. Ändern sich bspw. Zustände im Netz oder Randbedingungen im Netz, die bspw. die Stabilitätsreserve kurzfristig verkleinern, wird der Arbeitspunkt entsprechend wieder angepasst, um die Stabilitätsreserve wieder einzuhalten.

Gemäß einer Ausführungsform ist die Stabilitätsreserve ein kleinster erlaubter Abstand des Arbeitspunktes zur Stabilitätsgrenze, wenn die den Arbeitspunkt und die Stabilitätsgrenze beschreibenden Größen normiert sind. Bspw. können die Stabilitätsgrenze und auch der Arbeitspunkt jeweils durch die Größe eingespeister Blindleistung, eingespeister Wirkleistung und Spannung am Netzanschlusspunkt definiert sein. Dann kann eine Normierung der Wirkleistung auf die Nennleistung des Erzeugers und der Blindleistung ebenfalls auf die Nennleistung des Erzeugers vorgenommen werden. Die Spannung wird vorzugsweise auf die Nennspannung normiert. Dadurch werden diese Größen einheitenlos und können auch untereinander verglichen werden, was sonst bei unterschiedlichen Einheiten nicht ohne weiteres möglich ist.

Im genannten Beispiel bildet die Stabilitätsgrenze eine gekrümmte Fläche in einem Raum, nämlich in dem Raum, der gebildet wird, wenn die Blindleistung, die Wirkleistung und die Spannung ein kartesisches Koordinatensystem bilden. In diesem anschaulichen Beispiel kann die Stabilitätsreserve eine weitere gekrümmte Fläche sein, die bspw. grundsätzlich einen Abstand von 0,1 aufweist. Die Stabilitätsreserve bildet dann, ebenfalls anschaulich gesprochen, so etwas wie eine Pufferschicht.

Rechnerisch kann bspw. ein solcher kleinster erlaubter Abstand über die Wurzel der Summe der Quadrate der Differenzen jeder einzelnen normierten Größe berechnet werden.

Vorzugsweise werden für unterschiedliche Arbeitspunkte unterschiedliche Stabilitätsreserven vorgesehen. So kann bspw. die Stabilitätsreserve eines optimalen Arbeitspunktes, bei dem bspw. nominale Spannung vorliegt, Nennwirkleistung eingespeist wird und keine Blindleistung eingespeist wird, klein gewählt werden. Bei anderen Arbeitspunkten kann es sinnvoll sein, einen höheren Sicherheitsabstand vorzusehen. Die veranschaulicht genannte Pufferschicht hat dann keine durchgängig konstante Dicke. Ein solcher variierender oder konstanter Abstand beträgt vorzugsweise wenigstens 0,05, 0,1 oder insbesondere wenigstens 0,2.

Vorzugsweise wird beim Betrieb ständig die Stabilitätsreserve des aktuellen Arbeitspunktes beobachtet und insbesondere der Arbeitspunkt verändert, wenn sich ein Abstand zur Stabilitätsgrenze verringert, insbesondere, wenn er unter den Wert der betreffenden Stabilitätsreserve fällt. Diese Beobachtung kann online oder quasi-online erfolgen, also mit geringen Zeitabständen zwischen den Beobachtungszeitpunkten und/oder durch einen dynamischen Beobachter mit geringem Zeitversatz bzw. Zeitverzögerung. Hierdurch kann kurzfristig und schnell auf stabilitätsrelevante Änderungen reagiert werden und dabei ein stabiler Betrieb selbst in der Nähe der Stabilitätsgrenze erreicht werden.

Weiterhin wird eine Windenergieanlage vorgeschlagen, die einen mit einem aerodynamischen Rotor gekoppelten elektrischen Generator aufweist, um elektrische Energie aus Wind zu erzeugen und die eine Frequenzumrichtervorrichtung aufweist zum Einspeisen der elektrischen Energie in das Versorgungsnetz, wobei die Windenergieanlage gemäß wenigstens einem Verfahren der oben beschriebenen Ausführungsformen gesteuert wird. Die Windenergieanlage bildet hierbei nämlich den Erzeuger, und wird entsprechend zum Einspeisen in das Versorgungsnetz gesteuert.

Die Frequenzumrichtervorrichtung weist vorzugsweise einen Gleichrichter auf, der Wechselspannung von dem elektrischen Generator gleichrichtet, und sie weist einen Wechselrichter auf, zum Transformieren der Gleichspannung in eine Wechselspannung zum Einspeisen in das Versorgungsnetz. Eine solche Frequenzumrichtervorrichtung, bei der - bei der Vernachlässigung von Verlusten - die gesamte erzeugte elektrische Energie vollständig durch den Gleichrichter und durch den Wechselrichter geführt wird, kann auch als Vollumrichterkonzept oder Vollumrichtertopologie bezeichnet werden. Dabei kann anstatt eines Gleichrichters auch eine Kombination mehrerer Gleichrichter vorgesehen sein und/oder anstelle eines einzelnen Wechselrichters können mehrere Wechselrichter vorgesehen sein, die jeweils nur einen Teil der Energie wechselrichten.

Vorzugsweise ist die Windenergieanlage an den Netzanschlusspunkt angeschlossen und die erzeugte elektrische Energie wird an diesem Netzanschlusspunkt in das Versorgungsnetz eingespeist und es wird ein Kurzschlussstromverhältnis von weniger als 10, vorzugsweise weniger als 6, weiter vorzugsweise kleiner als 4 und insbesondere kleiner als 2 gewählt. Eine solche Wahl eines sehr kleinen Kurzschlussstromverhältnisses wird somit zusammen mit der entsprechenden Regelung des Erzeugers, nämlich der Windenergieanlage beim Einspeisen möglich gemacht. Es können somit Windenergieanlagen mit hohen Anschlussleistungen, insbesondere hohen Nennleistungen, an vergleichsweise schwache Netze angeschlossen werden und damit häufig an entsprechend dezentralen Orten aufgestellt werden. Hierdurch kann auch eine Erschließung von bisher ungeeigneten Aufstellungsorten erreicht werden, die sonst erst mit einer signifikanten Anpassung des Versorgungsnetzes hätten erschlossen werden können.

Vorzugsweise wird ein am Netzanschlusspunkt drohender Stabilitätsverlust erfasst und/oder angezeigt. Hierdurch soll möglichst ein Unterbrechen der Einspeisung vermieden werden oder der Erzeuger kann darauf vorbereitet werden, ein schnelles Wiedereinspeisen vorzunehmen, wenn der Stabilitätsverlust dann doch auftritt.

Das Erfassen oder Anzeigen des drohenden Stabilitätsverlustes erfolgt vorzugsweise wenn der Betrag einer partiellen Ableitung einer Netzspannung nach der eingespeisten Wirkleistung einen vorbestimmten Wirkleistungsgrenzwert überschreitet.

Durch die Berücksichtigung der partiellen Ableitung der Netzspannung nach der Wirkleistung kann eine Netzempfindlichkeit oder Netzsensitivität erkannt werden und das Ergebnis der Ableitung kann ggf. als Hinweis verwendet werden, einen stabileren Arbeitspunkt zu wählen.

Vorzugsweise wird ein drohender Stabilitätsverlust anhand eines Betrags einer partiellen Ableitung einer Netzspannung und nach der eingespeisten Blindleistung erfasst oder angezeigt, wenn dieser Betrag der partiellen Ableitung einen vorbestimmten Blindleistungsgrenzwert überschreitet. Auch hier wird die Netzsensitivität berücksichtigt bzw. bestimmt. Vorzugsweise wird der drohende Stabilitätsverlust erfasst oder angezeigt durch Zerlegung einer dreiphasigen Spannung des Versorgungsnetzes nach der Methode der symmetrischen Komponente, wobei von einem drohenden Stabilitätsverlust ausgegangen wird, wenn der Betrag einer Mitspannungskomponente größer ist als ein Mitspannungsgrenzwert. Außerdem oder alternativ wird vorgeschlagen, von einem drohenden Stabilitätsverlust auszugehen, wenn der Betrag einer Gegenspannungskomponente größer ist als ein Gegenspannungsgrenzwert. Durch die bekannte Methode der symmetrischen Komponenten werden insbesondere Unsymmetrien berücksichtigt. Wird der Betrag der Mitspannungskomponente überwacht, wird überwacht inwieweit, vereinfacht ausgedrückt, der symmetrische Anteil des dreiphasigen Spannungssystems einen Wert überschreitet oder unterschreitet. Bei der Berücksichtigung der Gegenspannungskomponente kann insbesondere erkannt werden, ob ein Unsymmetriegrad zu groß wird und auf eine Störung im Netz hindeutet, die einen Stabilitätsverlust erwarten lässt.

Auch kann der Betrag einer Differenz zwischen einer Referenzfrequenz und einer nominalen Frequenz berücksichtigt werden. Von einem drohenden Stabilitätsverlust kann ausgegangen werden, wenn die Differenz einen vorbestimmten Frequenzgrenzwert überschreitet oder unterschreitet bzw. den Betrag nach überschreitet.

Ebenfalls wird ein Windpark mit mehreren Windenergieanlagen vorgeschlagen, wobei jede Windenergieanlage einen aerodynamischen Rotor, elektrischen Generator und Frequenzumrichtervorrichtung wie oben beschrieben beinhaltet. Weiterhin wird der Betrieb des Parks mittels eines wie oben beschriebenen Verfahrens gemäß einer der Ausführungsformen vorgeschlagen. Insoweit wird der gesamte Park als Erzeuger im Sinne der beschriebenen Verfahren betrachtet und betrieben. Insbesondere das Kurzschlussstromverhältnis betrifft dann das Verhältnis der Kurzschlussleistung des Versorgungsnetzes des Anschlusspunktes bezogen auf die Anschlussleistung des Windparks, insbesondere die Summe der Nennleistungen aller Windenergieanlagen des betrachteten Windparks. Auch für diesen Windpark wird gemäß einer Ausführungsform vorgeschlagen, eine Auslegung mit einem kleinen Kurzschlussstromverhältnis vorzunehmen, insbesondere kleiner 10, kleiner als 6, kleiner als 4 und insbesondere vorzugsweise kleiner als 2. Insbesondere durch die Kombination mehrerer Windenergieanlagen in einem Windpark können große Anschlussleistungen, im Vergleich zu einer einzelnen Windenergieanlage, erreicht werden. Hierfür wird nun eine Lösung vorgeschlagen, die einen Anschluss an einem vergleichsweise schwachen Netz - bezogen auf den Anschlusspunkt - ermöglicht.

Eine wichtige Information für die vorgesehene Steuerung des Erzeugers zum Einspeisen elektrischer Energie in das Netz ist eine Netzsensitivität. Diese Netzsensitivität ist eine Eigenschaft, die insbesondere auf den Netzanschlusspunkt bezogen ist. Sie hängt von Netzeigenschaften wie der Netztopologie aber auch von aktuellen Netzzuständen ab. Sie gibt im Grunde an, wie empfindlich die Spannung am Netzanschlusspunkt auf Einflüsse reagiert. Wenn der Erzeuger eine Windenergieanlage oder ein Windpark mit mehreren Windenergieanlagen ist, ist die schwankende Windgeschwindigkeit eine äußere Größe, die über die Windenergieanlage auf das Netz und damit auf die Spannung am Anschlusspunkt Einfluss haben kann. Schwankungen der Windgeschwindigkeit können dabei starken oder schwachen Einfluss auf die Spannung am Anschlusspunkt haben und entsprechend liegt eine hohe oder schwache Netzsensitivität hinsichtlich der Windgeschwindigkeit vor.

Weiter kann der aktuelle Netzzustand Einfluss auf die Empfindlichkeit der Spannung am Netzanschlusspunkt haben. Bspw. ist das Netz weniger empfindlich für äußere Einflüsse, die Spannung am Netzanschlusspunkt ist also stabiler, wenn das Netz insbesondere bezogen auf den Netzanschlusspunkt in einem stabilen Arbeitspunkt arbeitet. Umgekehrt kann die Spannung am Netzanschlusspunkt leichter beeinflusst werden, wenn das Netz in einem weniger stabilen Arbeitspunkt arbeitet, wie bspw. einem Arbeitspunkt in dem im Fall einer Windenergieanlage diese bereits eine Netzstützung durchführt.

Eine solche Netzstützung durch eine Windenergieanlage kann bspw. durch Einspeisen von Blindleistung erfolgen. Vorzugsweise wird daher vorgeschlagen, dass die Netzsensitivität abhängig von der partiellen Ableitung der Spannung am Netzanschlusspunkt nach der eingespeisten Blindleistung gebildet wird. Ändert sich also die Spannung am Netzanschlusspunkt mit Änderungen der eingespeisten Blindleistung stark, liegt eine hohe Netzsensitivität vor, die Spannung ist also leichter beeinflussbar.

Alternativ oder zusätzlich wird vorgeschlagen, dass die Netzsensitivität abhängig von einer partiellen Ableitung der Spannung am Netzanschlusspunkt der von der Windenergieanlage erzeugten Leistung, nämlich Wirkleistung, gebildet wird. Von der Windenergieanlage erzeugte und eingespeiste Wirkleistung ist ein Maß für die vorhandene Windgeschwindigkeit. Führt eine Änderung dieser eingespeisten Leistung zu einer starken Änderung der Spannung am Netzanschlusspunkt, liegt eine hohe Empfindlichkeit hinsichtlich dieser Leistung und damit hinsichtlich Änderungen der Windgeschwindigkeit vor.

Vorzugsweise ist die Netzsensitivität eine Summe beider dieser partiellen Ableitungen, wobei diese Summierung auch gewichtet vorgenommen werden kann, um unterschiedlich starke Einflussnahme zu berücksichtigen oder anzunehmen.

Es wird nun vorzugsweise vorgeschlagen, die Steuerung des Erzeugers abhängig von dieser Netzsensitivität vorzunehmen. Insbesondere kann ein Regelverhalten schnell bzw. mit großer Verstärkung vorgenommen werden bzw. sollte es vorgenommen werden, wenn eine hohe Sensitivität vorliegt und somit im Falle äußerer Störungen schnell eingegriffen werden können muss. Andererseits kann bei schwacher Sensitivität ein langsamer Regler bzw. ein Regler mit kleiner Stärke ausreichend sein.

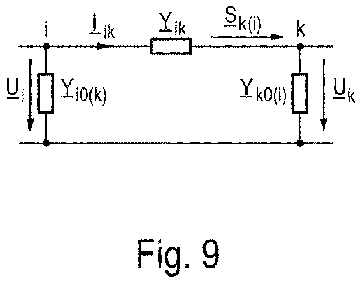

Eine nachfolgend beschriebene Lastflussrechnung wird für die Analyse von stationären Betriebszuständen von Energieversorgungsnetzen verwendet. Grundlage bildet dabei Figur 9 des betreffenden Netzes durch seine Impedanzen Z bzw. Admittanzen Y (komplexe Leitwerte).

In der klassischen Netzanalyse würde das Netz bestimmt werden durch das "ohmsche Gesetz" mit dem folgenden linearen Gleichungssystem in Matrix-Schreibweise, das einen Zusammenhang für n Knoten beschreibt.

$$\begin{bmatrix} \underline{Y}_{11} & \cdots & \underline{Y}_{12} & \underline{Y}_{1i} & \cdots & \underline{Y}_{1n} \\ \underline{Y}_{21} & \cdots & \underline{Y}_{22} & \underline{Y}_{2i} & \cdots & \underline{Y}_{2n} \\ \cdot & & \cdot & \cdot & & \cdot \\ \cdot & & \cdot & \cdot & & \cdot \\ \cdot & & \cdot & \cdot & & \cdot \\ \underline{Y}_{n1} & \cdots & \underline{Y}_{n2} & \underline{Y}_{ni} & \cdots & \underline{Y}_{nn} \end{bmatrix} \begin{bmatrix} \underline{U}_1 \\ \underline{U}_2 \\ \cdot \\ \cdot \\ \cdot \\ \underline{U}_n \end{bmatrix} = \begin{bmatrix} \underline{I}_1 \\ \underline{I}_2 \\ \cdot \\ \cdot \\ \cdot \\ \underline{I}_n \end{bmatrix}$$

oder kurz: **Y** · **U** = **I** (lineares Gleichungssystem).

Gesucht sind dabei die Spannungen an jedem der n Netzknoten (→Spannungshaltung).

Da aber die Ströme in den Netzen unbekannt sind, aber die (geplanten) Einspeisungen bzw. Abnahmen bekannt, werden die Ströme durch Leistungen ausgedrückt.

$$\underline{I}_{ii} = \frac{\underline{S}_i^*}{\underline{U}_i^*} = \frac{P_i - jQ_i}{\underline{U}_i^*}$$

Durch die Darstellung der Netzgleichungen über Leistungen entsteht jetzt ein nichtlineares Gleichungssystem.

$$\underline{S}_i^* = P_i - jQ_i = \underline{Y}_{i1}\underline{U}_1\underline{U}_i^* + \underline{Y}_{i2}\underline{U}_2\underline{U}_i^* \ldots = \underline{U}_i^* \sum_{k=1}^{n} \underline{Y}_{ik}\underline{U}_k$$

Gelöst wird dieses nichtlineare Gleichungssystem numerisch (meist mit einem Newton Verfahren). Im Rahmen der numerischen Lösung des Gleichungssystems, muss dieses linearisiert werden. Die Linearisierung erfolgt durch die partiellen Ableitungen der Matrixelemente nach den Unbekannten, nämlich hier noch der Amplitude ($U_2 \ldots U_n$ und dem Winkel ($\delta_2 \ldots \delta n$) der Knotenspannungen.

Die Matrix mit den partiellen Ableitungen wird Jacobi- Matrix genannt. Zur Lösung des GS muss diese invertierbar also regulär sein.

$$
\begin{bmatrix} \Delta P_2^{(0)} \\ \vdots \\ \Delta P_n^{(0)} \\ \vdots \\ \Delta Q_2^{(0)} \\ \vdots \\ \Delta Q_n^{(0)} \end{bmatrix} =
\left[
\begin{array}{ccc|ccc}
\left(\frac{\partial P_2}{\partial \delta_2}\right)^{(0)} & \cdots & \left(\frac{\partial P_2}{\partial \delta_n}\right)^{(0)} & \left(\frac{\partial P_2}{\partial U_2}\right)^{(0)} & \cdots & \left(\frac{\partial P_2}{\partial U_n}\right)^{(0)} \\
\vdots & & \vdots & \vdots & & \vdots \\
\left(\frac{\partial P_n}{\partial \delta_2}\right)^{(0)} & \cdots & \left(\frac{\partial P_n}{\partial \delta_n}\right)^{(0)} & \left(\frac{\partial P_n}{\partial U_2}\right)^{(0)} & \cdots & \left(\frac{\partial P_n}{\partial U_n}\right)^{(0)} \\
\hline
\left(\frac{\partial Q_2}{\partial \delta_2}\right)^{(0)} & \cdots & \left(\frac{\partial Q_2}{\partial \delta_n}\right)^{(0)} & \left(\frac{\partial Q_2}{\partial U_2}\right)^{(0)} & \cdots & \left(\frac{\partial Q_2}{\partial U_n}\right)^{(0)} \\
\vdots & & \vdots & \vdots & & \vdots \\
\left(\frac{\partial Q_n}{\partial \delta_2}\right)^{(0)} & \cdots & \left(\frac{\partial Q_n}{\partial \delta_n}\right)^{(0)} & \left(\frac{\partial Q_n}{\partial U_2}\right)^{(0)} & \cdots & \left(\frac{\partial Q_n}{\partial U_n}\right)^{(0)}
\end{array}
\right]
\begin{bmatrix} \Delta \delta_2^{(0)} \\ \vdots \\ \Delta \delta_n^{(0)} \\ \vdots \\ \Delta U_2^{(0)} \\ \vdots \\ \Delta U_n^{(0)} \end{bmatrix}
$$

Jacobi- Matrix

Nachfolgend wird die Erfindung anhand von Ausführungsformen exemplarisch unter Bezugnahme auf die begleitenden Figuren näher erläutert.

Fig. 1    zeigt eine Windenergieanlage in einer perspektivischen Ansicht.

Fig. 2    zeigt schematisch eine an ein Netz angeschlossene Windenergieanlage, basierend auf einem Spannungssteuersystem, das auch als "Voltage Control System" oder kurz VCS bezeichnet wird.

Fig. 3    zeigt schematisch eine Schaltungsanordnung einer spannungsgesteuerten Einspeisung einer Windenergieanlage in ein Wechselspannungsnetz.

Fig. 4    zeigt schematisch zwei über einen gemeinsamen Netzanschlusspunkt an ein Netz angeschlossene Windenergieanlage.

Fig. 5    veranschaulicht Einflussgrößen, die die Sensitivität einer an ein Netz angeschlossenen Windenergieanlage beeinflussen können.

Fig. 6    zeigt ein Diagramm als Auswertung des Verhaltens eines Netzes am Netzanschlusspunkt als Spannungsverläufe in Abhängigkeit der eingespeisten Blindleistung und eingespeisten Wirkleistung.

Fig. 7    zeigt eine Sensitivität als durch Änderungen der Wirkleistung bedingte Spannungsänderung in Abhängigkeit der eingespeisten und normierten Blindleistung und Wirkleistung.

Fig. 8    zeigt eine Sensitivität als durch Änderung der Blindleistung bedingte Spannungsänderung in Abhängigkeit der normierten Blindleistung und Wirkleistung.

Fig. 9    zeigt eine verallgemeinerte Netzabbildung.

Nachfolgend können identische Bezugszeichen für ähnliche aber nicht identische Elemente vorgesehen sein oder sie können auch für Elemente vorgesehen sein, die nur schematisch oder symbolisch dargestellt sind und sich in Details unterscheiden können, die für die jeweilige Erläuterung aber nicht relevant sind.

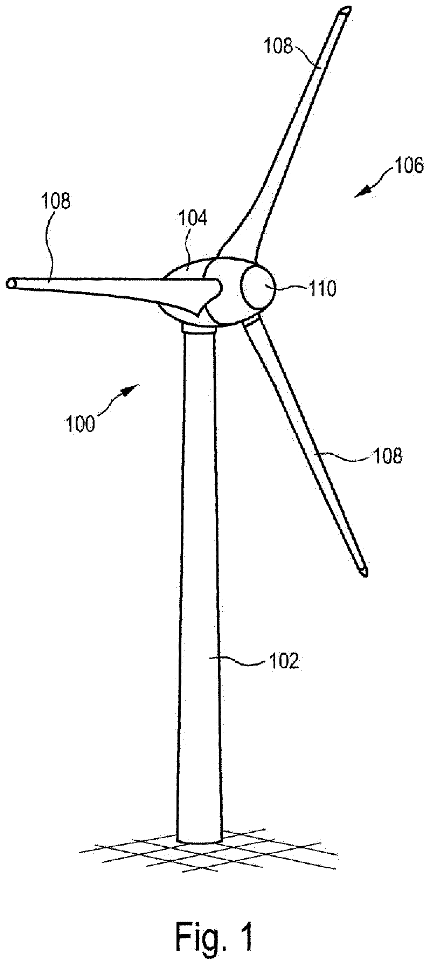

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

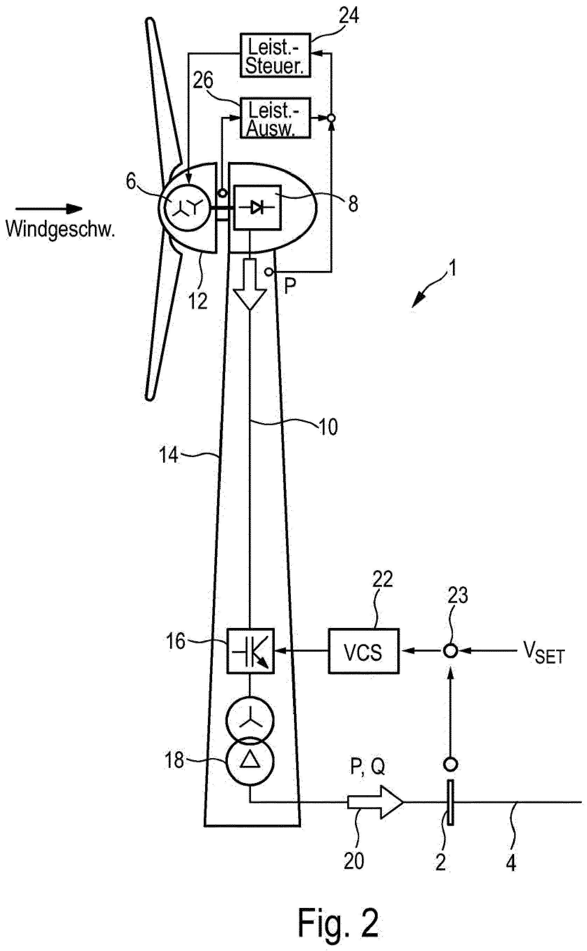

Fig. 2 zeigt schematisch eine Windenergieanlage 1, die über einen Netzanschlusspunkt 2 an ein elektrisches Versorgungsnetz 4 angeschlossen ist. Das elektrische Versorgungsnetz 4 wird vereinfachend auch als Netz 4 oder Netzwerk 4 nachfolgend bezeichnet, wobei diese Begriffe als Synonyme anzusehen sind.

Die Windenergieanlage 1 weist einen Generator 6 auf, der durch den Wind betrieben wird und dadurch elektrische Energie erzeugt. Der Generator 6 ist in einer Ausführungsform als elektrisch erregter Mehrphasen-Synchrongenerator 6 mit zwei jeweils sternförmig verschalteten 3-Phasensystemen ausgebildet, was durch die beiden Sternsymbole in dem Generator 6 der Fig. 2 veranschaulicht wird. Der so erzeugte Wechselstrom, nämlich in dem genannten Beispiel 6-phasige Wechselstrom, wird mit einem Gleichrichter 8 gleichgerichtet und als Gleichstrom über eine entsprechende Gleichstromleitung 10, die mehrere Einzelleitungen umfassen kann, von der Gondel 12 den Turm 14 herunter zu einem Wechselrichter 16 übertragen. Der Wechselrichter 16 erzeugt aus dem Gleichstrom einen Wechselstrom, nämlich in dem gezeigten Beispiel einen 3-phasigen Wechselstrom zum Einspeisen in das Netz 4. Hierzu wird die vom Wechselrichter 16 erzeugte Wechselspannung noch mittels eines Transformators 18 hochtransformatiert, um dann am Netzanschlusspunkt 2 in das Netz 4 eingespeist zu werden. Der gezeigte Transformator 18 verwendet eine Stern-Dreiecksschaltung, nämlich primärseitig eine Sternschaltung und sekundärseitig eine Dreiecksschaltung, was hier nur als ein Beispiel einer Ausführungsform dargestellt ist. Die Einspeisung in das Netz 4 kann neben der Einspeisung von Wirkleistung P auch die Einspeisung von Blindleistung Q beinhalten, was durch den Wirkpfeil 20 veranschaulicht wird. Für die konkrete Einspeisung wird der Wechselrichter 16 durch eine entsprechende Steuereinheit 22 angesteuert, wobei die Steuereinheit 22 auch baulich mit dem Wechselrichter 16 vereint sein kann. Überhaupt soll die Fig. 2 den grundsätzlichen Wirkaufbau veranschaulichen und die konkrete Anordnung einzelner Elemente kann auch anders als dargestellt gewählt werden. Bspw. kann der Trafo 18 außerhalb des Turms 14 vorgesehen sein.

Die Steuereinheit 22 steuert den Wechselrichter 16 insbesondere so an, dass die Art und Weise der Einspeisung in das Netz 4 gesteuert wird. Dabei werden Aufgaben wahrgenommen wie den einzuspeisenden Strom an die Situation im Netz 4, insbesondere Frequenz, Phase und Amplitude der Spannung im Netz 4 anzupassen. Außerdem ist die Steuereinheit 22 dazu vorgesehen, den Anteil von Wirkleistung P und Blindleistung Q der aktuell in das Netz 4 eingespeisten Leistung zu steuern. Hier werden Messungen im Netz 4, insbesondere am Netzanschlusspunkt 2 vorgenommen und entsprechend ausgewertet. Unter anderem wird auch die aktuelle Spannung im Netz 4, insbesondere in Form des aktuellen Effektivwertes der Spannung, gemessen und mit einem Vorgabewert für die Spannung, nämlich dem Vorgabewert $V_{SET}$ verglichen.

Entsprechend stellt das dargestellte System und insbesondere der Wechselrichter 16 mit der Steuereinheit 22 ein Spannungssteuersystem dar, das auch im deutschen Sprachgebrauch als "Voltage Control System", abgekürzt VCS, bezeichnet wird.

Für die Steuerung des Generators der Windenergieanlage sind im Bereich der Gondel ein Leistungssteuerblock 24 und ein Leistungsauswerteblock 26 vorgesehen. Der Leistungssteuerblock 24 steuert insbesondere die Erregung, nämlich den Erregerstrom, des fremderregten Synchrongenerators im Beispiel der gezeigten Ausführung. Der Leistungsauswerteblock 26 wertet die dem Gleichrichter 8 zugeführte Leistung aus und vergleicht sie mit der vom Gleichrichter 8 über die Gleichstromleitungen 10 zum Wechselrichter 16 abgegebene Leistung. Das Ergebnis dieser Auswertung wird weiter an den Leistungssteuerblock 24 gegeben.

Die Fig. 2 veranschaulicht auch, dass für eine entsprechend intelligente Einspeisung das gezeigte System mit einem Spannungssteuersystem versehen sein sollte, um die Windenergieanlage beim Einspeisen möglichst stabil zu betreiben, insbesondere in der Nähe einer Stabilitätsgrenze zu betreiben.

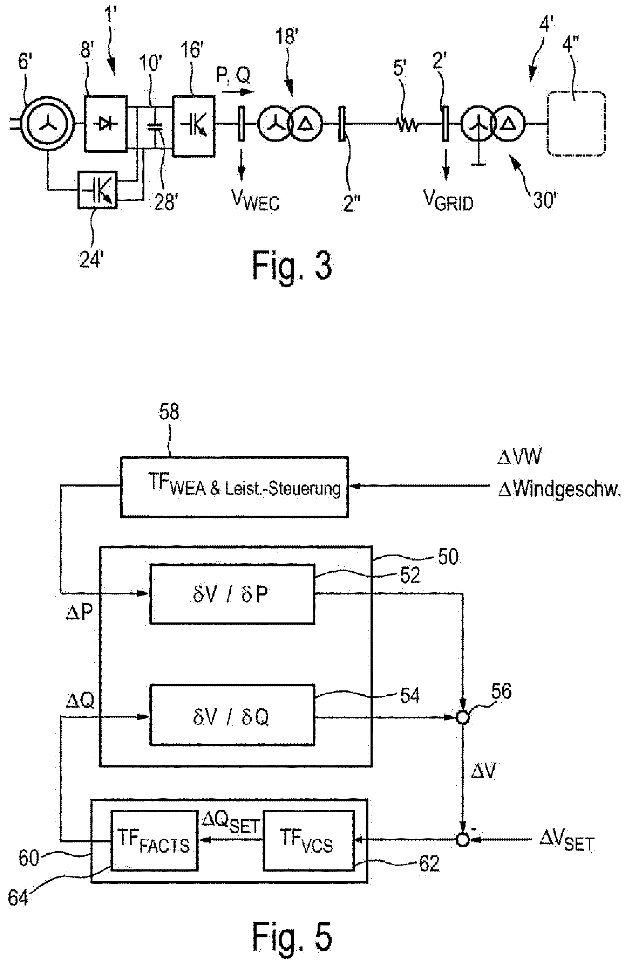

Fig. 3 veranschaulicht den Anschluss einer Windenergieanlage 1' an ein sog. "schwaches Netz 4". Unter einem schwachen Netz ist hier ein Netz mit hoher Impedanz zu verstehen. Das wird in der Fig. 3 durch eine Serien-Impedanz 5' veranschaulicht. Außerdem ist eine solche Serien-Impedanz 5' in einem Testaufbau vorgesehen gewesen, der der Struktur der Fig. 3 entspricht und mit dem das Verhalten der Windenergieanlage 1' an dem schwachen Netz 4' untersucht wurde.

Die Struktur der Fig. 3 geht von einem Generator 6' aus, der vom Wind angetrieben wird und als Synchrongenerator vorgesehen ist. Die erzeugte elektrische Leistung des Generators 6' wird in einem Gleichrichter 8' gleichgerichtet und einem Wechselrichter 16' eingangsseitig an einem Gleichspannungszwischenkreis mit einem Zwischenkreiskondensator 28' bereitgestellt. Die gezeigte Struktur setzt eine Gleichspannungsleitung 10' mit dem eingangsseitigen Gleichspannungszwischenkreis des Wechselrichters 16' gleich, um die Darstellung zu vereinfachen. Tatsächlich kann eine eingangsseitige Gleichstromleitung mit einem Zwischenkreis elektrisch identisch sein, oder es ist eingangsseitig noch ein Hochsetzsteller vorgesehen, was hier nicht im Detail ausgeführt wird. Auch kann der Gleichrichter 1' und der Wechselrichter 16' räumlich voneinander getrennt sein, wie bereits in der Fig. 2 zu dem Gleichrichter 8 und dem Wechselrichter 16 erläutert wurde.

Schließlich ist eine Erregersteuerung 24' vorgesehen, die aus Energie des Gleichspannungszwischenkreises, der durch den Zwischenkreiskondensator 28' repräsentiert wird, gespeist werden kann. Diese Erregersteuerung 24' steuert den Erregerstrom des fremderregten Generators 6' und entspricht im Grunde dem Leistungssteuerblock 24 der Fig. 2.

Der Wechselrichter 16' kann Wirkleistung P und/oder Blindleistung Q einspeisen. Dabei ist in der Fig. 3 die Spannung am Ausgang des Wechselrichters 16' als Spannung der Windenergieanlage $V_{WEC}$ angegeben. Zur Einspeisung wird diese über den Transformator 18' hochtransformiert und am Netzanschlusspunkt 2' ins Netz 4' eingespeist. Das Netz 4' weist hier auch einen weiteren Netztransformator 30' auf. Das eigentliche Netz, das nach dem Netztrafo 30' beginnt, ist mit dem Bezugszeichen 4" gekennzeichnet. Die Spannung am Netzanschlusspunkt 2' wird als Netzspannung $V_{Grid}$ bezeichnet.

Zur Veranschaulichung des schwachen Netzes ist die Serien-Impedanz 5' vor dem Netzanschlusspunkt 2' eingezeichnet. Diese Serien-Impedanz 5' ist nur in diesem Testaufbau bzw. veranschaulichenden Aufbau vorhanden und gibt die Netzimpedanz an. Daher kann auch der unmittelbar neben dem Trafo 18' gezeichnete Punkt als Netzanschlusspunkt 2" angesehen werden. Die Unterscheidung zwischen diesen beiden Netzanschlusspunkten 2' und 2" ergibt sich nur durch diese Verwendung der Serien-Impedanz 5' und ist ansonsten in realen Netzen so nicht vorzufinden.

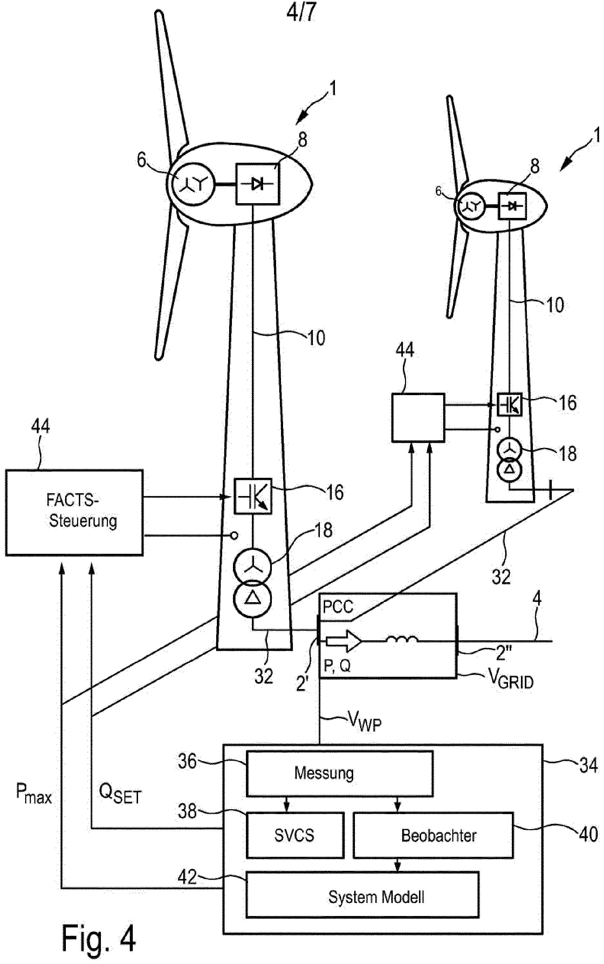

Fig. 4 zeigt eine weitere veranschaulichende und schematische Darstellung, gemäß der zwei Windenergieanlagen 1 an ein Versorgungsnetz 4 angeschlossen sind. Jede der Windenergieanlage 1 ist dabei dem Grunde nach wie in Fig. 2 erläutert aufgebaut, nämlich mit einem Generator 6, einem Gleichrichter 8 und einer Gleichstromleitung 10, die tatsächlich mindestens zwei einzelne Leitungen, nämlich für positiven und negativen Strom, aufweist, was entsprechend auch für die Gleichstromleitung 10 der Fig. 2 zutrifft. Weiterhin weist die Windenergieanlage 1 einen Wechselrichter 16 und einen Trafo 18 auf. Von jeder der beiden Windenergieanlagen 1 verläuft dann eine Anschlussleitung 32 zu einem bzw. dem windenergieanlagenseitigen Netzanschlusspunkt 2'. Somit speisen diese beiden exemplarisch gezeigten Windenergieanlagen 1, die auch repräsentativ für einen Windpark mit weit mehr als Windenergieanlagen stehen können, ihre erzeugte Leistung gemeinsam an diesem windenergieanlagenseitigem Netzanschlusspunkt 2' ein. Die eingespeiste Leistung P und eingespeiste Blindleistung Q, falls vorhanden, wird dann dem netzseitigen Anschlusspunkt 2" zugeführt und ins elektrische Versorgungsnetz 4 eingespeist.

Die Verbindung zwischen dem windenergieanlagenseitigen Netzanschlusspunkt 2' und dem netzseitigen Anschlusspunkt 2" ist nicht vernachlässigbar und entsprechend stellt sich eine windenergieanlagenseitige Spannung $V_{WP}$ am windenergieanlagenseitigen Netzanschlusspunkt 2' ein, wohingegen sich am netzseitigen Anschlusspunkt 2" die Spannung $V_{Grid}$ einstellt.

Zur Steuerung wird die windenergieanlagenseitige Spannung $V_{WP}$ erfasst und in einem Auswerteblock 34 ausgewertet. Die Auswertung erfolgt zunächst so, dass Messwerte mit dem Messblock 36 aufgenommen werden. Die Messergebnisse werden u.a. dem Stabilitätssteuerblock 38 zugeführt, der auch als SVCS-Block bezeichnet werden kann, wobei SVCS aus einer Abkürzung für den englischen Begriff "Stability Voltage Control System" abgeleitet ist. Der Stabilitätssteuerblock 38 berechnet eine Vorgabe für die bereitzustellende Blindleistung $Q_{Set}$. Diese einzustellende Blindleistung wird als entsprechender Vorgabewert an beide Windenergieanlagen 1 übergeben, und würde entsprechend an alle Windenergieanlagen in einem Betrag übergeben werden. Dieser Vorgabewert kann als Absolutwert übergeben werden, insbesondere dann, wenn die Windenergieanlagen 1 die gleiche Größe aufweisen und demselben Wind ausgesetzt sind. Es kann aber auch als Vorgabewert bspw. ein prozentualer Wert ausgegeben werden, der sich auf Eigenschaften der jeweiligen Windenergieanlage bezieht, wie bspw. die Nennleistung der betreffenden Windenergieanlage.

Weiterhin gibt der Messblock 36 Werte weiter an den Beobachterblock 40, der aus den ermittelten Messwerten weitere Zustände ermittelt, wie bspw. die eingespeiste Wirkleistung oder eingespeiste Blindleistung, und seine Ergebnisse weiter an den Systemmodelblock 42 weitergibt. Der Beobachterblock 40 kann ggf. auch Informationen über einen Leistungsbedarf ermitteln oder ableiten.

Das Systemmodel des Systemmodelblocks 42 wird dann dazu verwendet, eine maximal einzuspeisende Wirkleisung $P_{max}$ zu bestimmen und den Windenergieanlagen 1 zuzuleiten. Auch diese maximal einzuspeisende Wirkleistung kann als Absolutwert oder Relativwert ausgegeben werden. Es wird darauf hingewiesen, dass die Veranschaulichung des Auswerteblocks 34 die Struktur verdeutlichen soll. Grundsätzlich ist es nicht erforderlich, dass der Auswerteblock 34 körperlich als eigenständiges Gerät ausgebildet ist.

Die vorgegebene Blindleistung Qset und die maximale Wirkleisung $P_{max}$ werden dann an den FACTS-Steuerblock 44 jeder Windenergieanlage 1 gegeben. Die Bezeichnung "FACTS" ist auch im deutschen Sprachgebrauch üblich und ist eine Abkürzung für "Flexible AC Transmission System". Der FACTS-Steuerblock 44 setzt dann die Vorgabewerte um und steuert entsprechend den Wechselrichter 16 an, wobei er hierfür auch Messwerte von Zuständen aus der Windenergieanlage mit berücksichtigen kann.

Insbesondere, aber nicht nur, können stabilitätsrelevante Vorgaben für ein stabiles Einspeisen in das Netz 4 durch den Auswerteblock 34 realisiert werden. Insbesondere kann ein Arbeitspunkt vorgegeben werden, der hinsichtlich einzuspeisender Energiemenge bzw. Leistungshöhe und Stabilität günstig ist. Insbesondere kann ein Arbeitspunkt mit einer Stabilitätsreserve hierbei vorgegeben werden. Eine Stabilitätsreserve hinsichtlich einzuspeisender Blindleistung kann hierbei der Stabilitätssteuerblock 38 durch eine entsprechende Vorgabe der Blindleistung Qset erreichen.

Fig. 5 veranschaulicht die Sensitivität einer ans Netz angeschlossenen Windenergieanlage und die Einflussgrößen hierzu. Repräsentativ für das Verhalten des Netzes, nämlich am Netzanschlusspunkt ist der Netzblock 50 der Fig. 5 angegeben. Der Netzblock 50 veranschaulicht, dass das Netz durch eine Spannungsänderung auf Einflüsse reagieren kann. Als Einflüsse sind hier Änderungen der Wirkleistung $\Delta P$ und Änderung der Blindleistung $\Delta Q$ veranschaulicht. Den Einfluss von Leistungsänderungen berücksichtigt der Wirkleistungsblock 52 und den Einfluss von Änderungen der Blindleistung berücksichtigt der Blindleistungsblock 54. Der Wirkleistungsblock 52 zeigt eine partielle Ableitung der Spannung nach der Wirkleistung und entsprechend zeigt der Blindleistungsblock 54 eine partielle Ableitung der Spannung nach der Blindleistung. Das ist eine Möglichkeit, die jeweilige Dynamik des Netzverhaltens, also der Netzsensitivität, nämlich Reaktionen auf Änderungen der Wirkleistung und der Blindleistung über entsprechend partielle Ableitungen zu berücksichtigen, deren Ergebnis in dem Summierblock 56 aufaddiert werden. Der Netzblock 50 zusammen mit dem Summierblock 56 berücksichtigt somit eine Abhängigkeit der Spannung des Netzes am Netzanschlusspunkt von zwei Größen, nämlich von der Wirkleistung und von der Blindleistung. Die Abhängigkeit wird hier über die beiden partiellen Ableitungen berücksichtigt.

Änderungen der Wirkleistung ergeben sich insbesondere aus Änderungen der Windgeschwindigkeit $\Delta VW$, die auf den Windenergieanlagenblock 58 wirkt. Dieser Windenergieanlagenblock 58 verdeutlicht den Einfluss der Änderung der Windgeschwindigkeit $\Delta VW$ auf die Änderung der Wirkleistung $\Delta P$, wobei aber auch die Steuerung der Windenergieanlage berücksichtigt werden muss und mit diesem Block 58 berücksichtigt wird.

Die Änderung der Blindleistung $\Delta Q$ kann zwar auch von der Windenergieanlage, zumindest der Steuerung der Windenergieanlage abhängen, folgt aber anderen im Wesentlichen von der Windgeschwindigkeit unabhängigen Zusammenhängen. Ihre Änderung wird durch den Steuerungsblock 60 veranschaulicht. Dieser Steuerungsblock 60 ist dabei zur Erläuterung unterteilt in den Blindleistungsvorgabeblock 62 und den FACTS-Block 64. Der Steuerungsblock 60 und damit der Blindleistungsvorgabeblock 62 sind zunächst abhängig von einer Spannungsabweichung $\Delta V$, nämlich am Netzanschlusspunkt, abzüglich einer vorgegebenen Spannungsabweichung $\Delta V_{SET}$. Von dieser resultierenden Spannungsabweichung ausgehend, bestimmt der Blindleistungsvorgabeblock 62 eine einzuspeisende Blindleistung bzw. abhängig von einer Spannungsänderung eine vorgegebene Änderung der einzuspeisenden Blindleistung. Dies wird an den FACTS-Block 64 übergeben, der entsprechend eine Umsetzung der Einspeisung der Blindleistung bzw. der Änderung der Einspeisung der Blindleistung realisiert.

Der Windenergieanlagenblock 58 und der Steuerungsblock 60 können auch als Übertragungsfunktion der jeweiligen Eingangsgröße verstanden werden bzw. der Blindleistungsvorgabeblock 62 und der FACTS-Block 64 können jeweils als einzelne Übertragungsfunktionen verstanden werden, die in dem Steuerungsblock 60 verkettet sind.

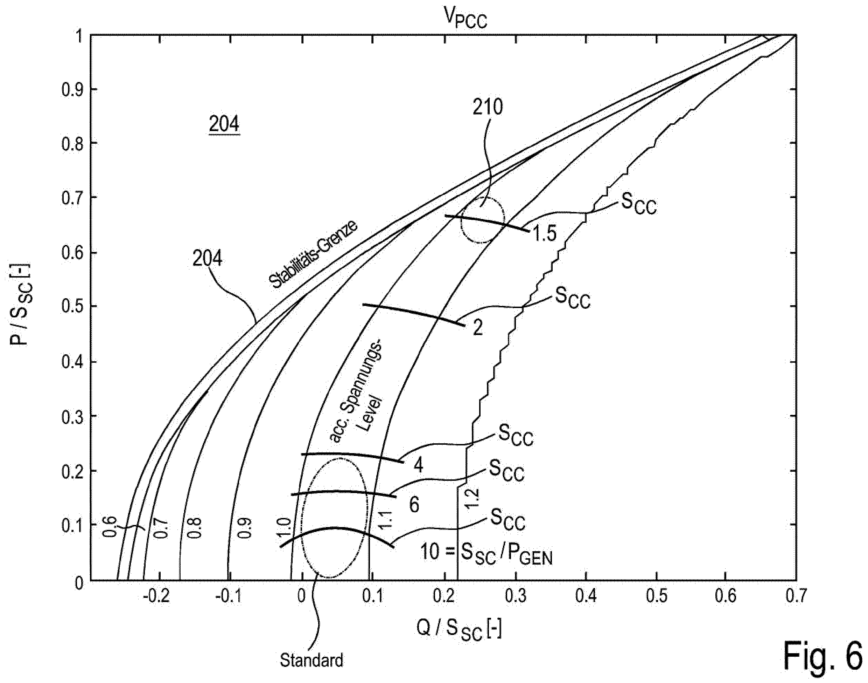

Fig. 6 zeigt für eine Ausführungsform eine Abhängigkeit der Spannung am Netzanschlusspunkt in Abhängigkeit der eingespeisten Blindleistung Q und der eingespeisten Wirkleistung P. Die Blindleistung Q ist auf die Kurzschlussleistung Ssc des Netzes an dem untersuchten Netzanschlusspunkt normiert und an der Abszisse aufgetragen. Die Leistung P ist ebenfalls auf die Kurzschlussleistung Ssc desselben Netzanschlusspunktes normiert und an der Ordinate aufgetragen. Die Spannung $V_{PCC}$ ist die Spannung am Netzanschlusspunkt normiert auf die Nennspannung $V_N$. Diese normierte Spannung am Netzanschlusspunkt ist für unterschiedliche Werte jeweils als Graph in Abhängigkeit der normierten Blindleistung Q und der normierten Wirkleistung P aufgetragen. Entsprechend ist der Graph bzw. die Kennlinie mit dem Wert 1 diejenige Kennlinie, die darstellt, bei welchen Werten für Blindleistung und Wirkleistung sich Nennspannung einstellt.

Bspw. stellt sich Nennspannung ein, wenn bezogen auf die Kurzschlussleistung Ssc 10 % Blindleistung Q und 50 % Wirkleistung P eingespeist wird.

Die Graphik der Fig. 6 zeigt Eigenschaften eines Netzanschlusspunktes eines Netzes mit hoher Impedanz, jedenfalls bezogen auf diesen Netzanschlusspunkt.

Üblicherweise würde für den dargestellten Netzanschlusspunkt des beispielhaften Netzes eine Einspeisung etwa in dem Standardbetriebsbereich 200 erfolgen. Es würde also eine Einspeisung mit einer Wirkleistung P von etwa 10 % der Kurzschlussleistung Ssc erfolgen mit Einspeisung von etwa 5 % Blindleistung der Kurzschlussleistung Ssc. Unter der idealisierenden Annahme, dass die eingespeiste Wirkleistung P der Nennleistung bzw. Anschlussleistung des Generators bzw. der Summe der an dem Netzanschlusspunkt angeschlossenen Generatoren entspricht, wäre die Einspeisung von 10 % der Kurzschlussleistung Ssc gleichbedeutend damit, dass die Anschlussleistung $P_{Gen}$ 10% der Kurzschlussleistung Ssc beträgt. Es liegt also ein Kurzschlussstromverhältnis Scr = $S_{SC}/P_{Gen}$ von etwa 10 vor. Das entspricht etwa dem Mittelpunkt des dargestellten Standardbetriebsbereichs 200. In der Fig. 6 sind zur Orientierung weitere Kurzschlussstromverhältnisse Scr als kurze Striche eingezeichnet, nämlich für die Werte für Scr von 10; 6; 4; 2 und 1, 5.

Erfindungsgemäß wird aber vorgeschlagen, deutlich mehr Wirkleistung P einzuspeisen, nämlich im Bereich von 60 bis 70 % der Kurzschlussleisung Ssc. Entsprechend ist hierfür die Einspeisung von 20 bis 30 % Blindleistung Q bezogen auf die Kurzschlussleistung Ssc vorzusehen, um die Spannung am Netzanschlusspunkt im Bereich von 100 bis 110 % der Nennspannung zu halten. Es wird hier vorsorglich darauf hingewiesen, dass das Einspeisen von 110 % der Nennspannung am Netzanschlusspunkt nicht bedeutet, dass am Verbraucher eine erhöhte Spannung von 110 % messbar ist. Zum einen liegt üblicherweise noch ein nicht zu vernachlässigender Netzabschnitt zwischen Netzanschlusspunkt und erstem relevanten Verbraucher, zum anderen können im Netz auch bspw. Stufentransformatoren vorgesehen sein, die in gewissen Grenzen einen Ausgleich vornehmen können. Auf die hier sich anschließenden Maßnahmen, die sehr individuell vom Netz einschließlich Verbraucher und Erzeuger und diversen anderen Randbedingungen abhängen, kann im Rahmen dieser Anmeldung nicht eingegangen werden. Die notwendigen Maßnahmen sind dem Fachmann grundsätzlich geläufig.

Dieser vorgeschlagene Bereich ist in der Fig. 6 als erhöhter Betriebsbereich 210 eingezeichnet. Bei diesem erhöhten Betriebsbereich liegt etwa ein Kurzschlussstromverhältnis Scr von 1,5 vor. Bei einem solchen Kurzschlussstromverhältnis wurde bisher kein nennenswerter Erzeuger an das Netz angeschlossen.

Die Darstellung der Fig. 6 ist das Ergebnis einer Netzanalyse des zugrundeliegenden Netzes bezogen auf den betrachteten Netzanschlusspunkt. Hierfür wurde, wie eingangs erläutert wurde, eine Analyse der relevanten Elemente im Netz vorgenommen und jeweils durch Lösen der Jacobi-Matrix ermittelt. Dabei ergibt sich die vorliegende Darstellung der Fig. 6, demnach vereinfacht ausgedrückt die Kennlinien nach rechts, also mit höherer eingespeister Blindleistung Q auch zunehmende Spannungen am Netzanschlusspunkt wiedergeben. Mit abnehmender Blindleistung Q, also nach links, nimmt die Spannung am Netzanschlusspunkt ab. Dabei kann die Blindleistung Q nicht beliebig abnehmen und bei zu kleiner (bereits negativer) Blindleistung Q, wird, je nach zugehöriger Wirkleistung P, die Jacobi-Matrix singulär, also im mathematischen Sinne nicht lösbar. Eine singuläre Jacobi-Matrix bedeutet, dass ein instabiler Zustand vorliegt. Entsprechend ergibt sich eine Stabilitätsgrenze 202, die entsprechend am linken Rand der Darstellung der Fig. 6 eingezeichnet ist. Der Bereich, der links von der Stabilitätsgrenze 202 liegt, also jeweils eine höhere Wirkleistung P und/oder eine niedrigere Blindleistung Q aufweist, ist der instabile Bereich 204. Rein vorsorglich wird darauf hingewiesen, dass die Stabilitätsgrenze 202 nicht mit einer einzelnen Kennlinie eines Spannungswertes am Netzanschlusspunkt zusammenfällt, sondern vielmehr die Kennlinienschar zu schneiden scheint. Tatsächlich kann die Kennlinienschar nicht geschnitten werden, weil jenseits der Stabilitätsgrenze 202 keine Werte und damit auch Kennlinienschar vorliegen.

Der nun bevorzugte Betriebsbereich, nämlich der erhöhte Betriebsbereich 210, hat zunächst einmal einen geringeren Abstand zu Stabilitätsgrenze 202, als der Standardbetriebsbereich 200. Dabei ist aber zu beachten, dass bisher konkrete Überlegungen und Analysen hinsichtlich der Netzeigenschaften, wie sie die Fig. 6 wiedergibt, nicht vorgenommen wurden. Insbesondere war nicht oder zumindest nicht in der gezeigten Qualität und gezeigten Quantität der Fig. 6 der Abstand zu einer Stabilitätsgrenze, wie sie in Fig. 6 als Stabilitätsgrenze 202 eingezeichnet ist, bekannt. Vielmehr hat man sich bei der Installation von Großkraftwerken an dem Kriterium des Kurzschlussstromverhältnisses orientiert und dieses möglichst groß, vorzugsweise über oder sogar deutlich über 10 gewählt. Kleine Erzeuger wie Windenergieanlagen wiederum sind bisher üblicherweise an starke Netze angeschlossen worden, die ohne Weiteres den Anschluss einer weiteren Windenergieanlage verkraften konnten. Im Ergebnis erfolgte auch da ein Anschluss, sei es nun gewollt oder ungewollt, mit hohem Kurzschlussstromverhältnis Ssc.

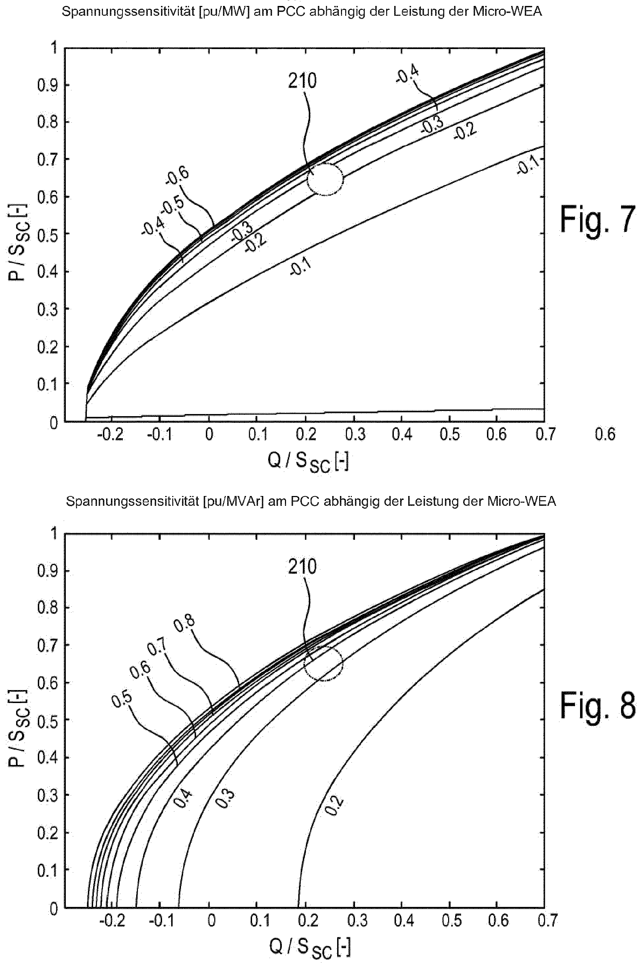

Die vorgeschlagene Lösung analysiert zunächst genau das Netz bezogen auf den vorgesehenen Netzanschlusspunkt, insbesondere indem Zusammenhänge wie in der Fig. 6 - und vorzugsweise in den später noch erläuterten Figuren 7 und 8 - dargestellt sind, quantitativ aufgenommen werden. Insbesondere erfolgt eine solche Analyse unter wiederholter Aufstellung und Lösung der Jacobi-Matrix für diverse Punkte. Basierend auf einer solchen Netzanalyse kann dann sowohl eine Stabilitätsgrenze gemäß der Stabilitätsgrenze 202 festgelegt werden, als auch ein gewünschter Betriebsbereich gemäß dem erhöhten Betriebsbereich 210 der Fig. 6 ausgewählt werden.

Ergänzend wird vorgeschlagen, dass eine Regelung der Windenergieanlage im Sinne einer geschlossenen Regelschleife durchgeführt wird, wie sie insbesondere in der Fig. 2 oder auch der Fig. 4 dargestellt ist. In Fig. 2 besteht die Regelschleife im Wesentlichen aus dem Wechselrichter 16, dem Trafo 18 und der Steuereinheit 22, die Messwerte am Netzanschlusspunkt 2 berücksichtigt und den Wechselrichter 16 steuert, um dadurch die eingespeiste Wirkleistung P und Blindleistung Q gemäß dem Wirkpfeil 20 einzustellen. Die Regelung kann zwar auch Auswirkung auf die Steuerung der Windenergieanlage im Bereich des Generators 6 haben, zunächst kommt aber die beschriebene Regelschleife aus Wechselrichter 16, Trafo 18 und Steuereinheit 22 ohne mechanische Elemente aus und kann äußerst schnell reagieren. Hierfür kann die Kenntnis der Netzeigenschaften am Netzanschlusspunkt, also Netzanschlusspunkt 2 gemäß Fig. 2, mit berücksichtigt werden, insbesondere in der Steuereinheit 22 mit berücksichtigt werden. Es ist somit eine schnelle Regelung implementierbar, die dabei das Verhalten des Netzes am Netzanschlusspunkt, insbesondere die Stabilitätsgrenze kennt. Hierdurch wird es möglich, die Windenergieanlage oder den Windpark - ggf. auch andere Erzeuger - in einem gewünschten Betriebsbereich, wie dem erhöhten Betriebsbereich 210 der Fig. 6, zu betreiben und dabei gleichwohl eine hohe Stabilität und Sicherheit zu gewährleisten.

Die Figuren 7 und 8 zeigen die Spannungssensitivität in Abhängigkeit der Blindleistung Q und der Wirkleistung P. Beide Figuren 7 und 8 verwenden somit die gleichen Werte an Abszisse und Ordinate, nämlich normierte Blindleistung an der Abszisse bzw. normierte Wirkleistung an der Ordinate.

Die gezeigte Spannungssensitivität ist die Änderung der Spannung mit der Änderung der Wirkleistung gemäß Fig. 7 bzw. die Änderung der Spannung mit der Blindleistung gemäß Fig. 8. Anders ausgedrückt wird die partielle Ableitung der Spannung am Netzanschlusspunkt nach der Wirkleistung in Fig. 7 und die partielle Ableitung der Spannung nach der Blindleistung in Fig. 8 dargestellt. Fig. 7 zeigt somit das Verhalten des Wirkleistungsblocks 52 der Fig. 5. Fig. 8 zeigt das Verhalten des Blindleistungsblocks 54 der Fig. 5, wobei in beiden Fällen die Darstellung abhängig der Betriebspunkte dargestellt ist, die insoweit durch die jeweils aktuell eingespeiste Blindleistung Q und eingespeiste Wirkleistung P bestimmt werden. Die Werte der jeweiligen Kennlinien beziehen sich auf einen Netzanschlusspunkt mit einer Kurzschlussleistung Ssc = 3,73MVA an den beispielhaft zwei Windenergieanlagen mit je einer Nennleistung von 2MW angeschlossen werden sollen. Somit könnten mit dieser Testanordnung Tests bei einem Kurzschlussstromverhältnis von etwas weniger als 1 durchgeführt werden. Für durchgeführte Tests wurde aber die jeweils aktuelle Leistung der Testwindfarm als Basis verwendet und als Anschlussleistung der Zielwindfarm, also der (fiktiv) zu untersuchenden Windfarm festgelegt.

Bezogen auf die vorliegende Ausführungsform, also die Beispielkonfiguration, ist jeweils die Änderung der normierten Spannung bezogen auf eine Änderung der Leistung P in MW bzw. eine Änderung der Blindleistung Q in MVAr beschrieben. In den Figuren 7 und 8 ist zudem der gewünschte, also erhöhte Betriebsbereich 210 eingezeichnet. Demnach beträgt die Spannungssensitivität bezogen auf Wirkleistungsänderungen gemäß Fig. 7 etwa minus 0,2 bis minus 0,4. Die Spannungssensitivität in dem erhöhten Betriebsbereich 210 bezogen auf Änderungen der Blindleistung gemäß Fig. 8 beträgt etwa 0,3 bis 0,5. Es wird somit vorgeschlagen, für die Auslegung der an dem konkreten Netzanschlusspunkt anzuschließenden Windenergieanlage diese Spannungssensitivität in Bezug auf Änderungen der Wirkleistung, wie beispielhaft in Fig. 7 gezeigt, und/oder in Bezug auf Änderungen der Blindleistung, wie beispielhaft in Fig. 8 gezeigt, aufzunehmen und in der Steuerung zu berücksichtigen. Insbesondere sollen diese Werte auch bei der Steuerung und vorzugsweise auch bei der Auslegung der Steuerung berücksichtigt werden. Vorzugsweise wird eine Reglerverstärkung abhängig von der Sensitivität, insbesondere Spannungssensitivität ausgewählt.

Insbesondere wird vorgeschlagen, diese Werte in dem geschlossenen Regelkreis zu berücksichtigen, wie er schematisch durch die in Fig. 2 gezeigten Elemente Wechselrichter 16, Trafo 18 und Steuereinheit 22 verwirklicht wird. Dabei kommt es auf den Trafo 18 weniger an, er dürfte jedoch häufig vorhanden und notwendig sein, um schon am Netzanschlusspunkt 2 eine entsprechend hohe Spannung einspeisen zu können. Insbesondere werden Erkenntnisse über die Spannungssensitivität in der Steuereinheit 22 berücksichtigt. Somit kann in Kenntnis dieser Werte eine maßgeschneiderte Steuerung bzw. Regelung für den konkreten Netzanschlusspunkt ausgelegt und umgesetzt werden. Damit ist es dann möglich, von bisherigen großen Werten des Kurzschlussstromverhältnisses von 10 und noch höher herunterzukommen und geringe Werte, wie bspw. einen Wert von 1,5 für das Kurzschlussstromverhältnis, vorzusehen und damit die Windenergieanlage in dem erhöhten Betriebsbereich 210 zu betreiben, der in den Figuren 6 bis 8 zur Veranschaulichung eingezeichnet ist.

Die Erfindung schlägt somit vor, insbesondere eine Windenergieanlage und schließlich auch einen Windpark nicht mehr nach dem alten Prinzip des Netzparallelbetriebs anzuschließen, in der Annahme, dass die Netzkapazität ausreicht, sondern vielmehr gezielt den Anschlusspunkt auszuwerten und diese Erkenntnisse bereits im Vorfeld zu berücksichtigen und dann eine maßgeschneiderte Windenergieanlage oder Windenergieanlagenpark dort anzuschließen. Dabei wird vorzugsweise auch die Steuerung bzw. Regelung und auch der auszuwählende Betriebsbereich, insbesondere in Bezug auf einzuspeisende Blindleistung Q und einzuspeisende Wirkleistung P maßgeschneidert und näher an einer Stabilitätsgrenze angeordnet, als von der Fachwelt bisher durchgeführt wurde. Dabei werden gezielt die Vorzüge einer Windenergieanlage eingesetzt, nämlich auf Änderungen, insbesondere Änderungen von Zuständen des Netzes schnell, und gezielt reagieren zu können. Hierdurch wird jedenfalls für das Anschließen von Windenergieanlagen an das Netz eine massive Überdimensionierung des Netzes, insbesondere des konkreten Netzanschlusspunktes, vermieden. Gleichwohl kann die Stabilität eingehalten oder sogar verbessert werden, wenn die Steuerung bzw. Regelung sehr genau die Eigenschaften des Netzanschlusspunktes bzw. des Netzes bezogen auf den Netzanschlusspunkt kennt und Zustände im Netz beobachtet.

Rein vorsorglich wird noch darauf hingewiesen, dass unter einer Regelung grundsätzlich ein geschlossener Regelkreis mit Rückführung verstanden wird, wobei eine Steuerung grundsätzlich einen offenen "Regelkreis" bezeichnet, also eine Situation ohne Rückführung. Gleichwohl kann ein Steuerblock, der wiederum ein Steuerverfahren implementiert, in einer Regelschleife eingesetzt werden. Für das Beispiel der Fig. 2 bedeutet das, dass die Steuereinheit 22 insoweit eine Steuerung ist, als dass sie eine bestimmte Steuerfunktion oder Übertragungsfunktion, die auch nicht linear und/oder sprunghaft sein kann und/oder mehrere Größen betreffen kann, aufweist. Eingesetzt wird diese Steuereinheit allerdings in dem Regelkreis, der in Fig. 2 dargestellt ist und im Wesentlichen neben der Steuereinheit 22 den Wechselrichter 16, Trafo 18 und schließlich eine Messeinheit am Netzanschlusspunkt 2 mit Vergleichseinheit 23 umfasst. Die Steuereinheit 22 steuert also den Wechselrichter und ist dafür in dem geschlossenen Regelkreis eingebunden und damit Teil einer Regelung.

**Patentansprüche**

1. Verfahren zum Steuern eines an einem Netzanschlusspunkt (2) an ein elektrisches Versorgungsnetz (4) angeschlossenen Erzeugers (1) elektrischer Energie, umfassend die Schritte:

   - Aufnehmen wenigstens einer auf den Netzanschlusspunkt (2) bezogenen Netzeigenschaft des elektrischen Versorgungsnetzes (4),
   - Steuern des Erzeugers (1) so, dass er in Abhängigkeit der aufgenommenen Netzeigenschaft Strom in das elektrische Versorgungsnetz (4) einspeist.

2. Verfahren nach Anspruch 1,
   **dadurch gekennzeichnet, dass**
   der Erzeuger (1) ein dezentraler Erzeuger (1) und/oder eine Windenergieanlage (1) oder ein mehrere Windenergieanlagen (1) umfassender Windpark ist und insbesondere mittels eines Spannungswechselrichters (16) in das Versorgungsnetz (4) einspeist.

3. Verfahren nach einem der vorstehenden Ansprüche, wobei als Erzeuger (1) wenigstens eine Windenergieanlage (1) verwendet wird und wobei für den Netzanschlusspunkt (2) eine Netzsensitivität erfasst wird, die eine momentane Abhängigkeit der Spannung am Netzanschlusspunkt (2) von der aktuellen Windgeschwindigkeit und/oder vom aktuellen Netzzustand angibt, wobei insbesondere die Netzsensitivität abhängig von

   - der partiellen Ableitung der Spannung (V) am Netzanschlusspunkt (2) nach der von der Windenergieanlage (1) erzeugten Leistung (8) und/oder
   - der partiellen Ableitung der Spannung (V) am Netzanschlusspunkt (2) nach der eingespeisten Blindleistung (Q)

   gebildet wird, insbesondere als Summe beider partiellen Ableitungen gebildet wird, und/oder dass
   eine Steuerung des Erzeugers (1) abhängig von der aktuellen Netzsensitivität erfolgt, wobei insbesondere eine schnellere Reglercharakteristik und/oder eine Reglercharakteristik mit stärkerer Verstärkung verwendet wird, je höher die Netzsensitivität ist und/oder ein nichtlinearer Regler verwendet wird.

4. Verfahren nach einem der vorstehenden Ansprüche,
   **dadurch gekennzeichnet, dass**
   das Aufnehmen der wenigstens einen Netzeigenschaft das Aufnehmen einer Stabilitätsgrenze (202) umfasst und die Stabilitätsgrenze (202) als Funktion der Netzspannung (V) am Netzanschlusspunkt (2) in Abhängigkeit der eingespeisten Blindleistung (Q) und in Abhängigkeit der eingespeisten Wirkleistung (P) angegeben werden kann, und/oder die Stabilitätsgrenze (202) als gekrümmte Fläche in einem durch die Netzspannung (V) am Netzanschlusspunkt (2), der eingespeisten Blindleistung (Q) und der eingespeisten Wirkleistung (8) aufgespannten Raum dargestellt werden kann.

5. Verfahren nach einem der vorstehenden Ansprüche,
   **dadurch gekennzeichnet, dass**
   die wenigstens eine aufgenommene Netzeigenschaft dadurch aufgenommen wird, dass

   - von dem Versorgungsnetz (4) eine Netzanalyse vorgenommen wird,
   - aus der Netzanalyse ein Modell des Versorgungsnetzes (4) erstellt wird,
   - basierend auf dem Netzmodell für den Netzanschlusspunkt (2) mehrere, unterschiedliche Betriebspunkte simuliert werden und
   - die Ergebnisse der Simulation als die wenigstens eine Netzeigenschaft verwendet werden.

6. Verfahren nach einem der vorstehenden Ansprüche,
   **dadurch gekennzeichnet, dass**
   eine bzw. die Stabilitätsgrenze (202) in einer Tabelle hinterlegt wird und/oder mit einer analytischen Funktion angenähert wird und/oder dass bei der Aufnahme der wenigstens einen Netzeigenschaft auch Eigenschaften des Erzeugers (1) berücksichtigt werden und ein Kurzschlussstromverhältnis (Scr) aufgenommen wird.

**7.** Verfahren nach einem der vorstehenden Ansprüchen,
**dadurch gekennzeichnet, dass**
ein am Netzanschlusspunkt (2) drohender Stabilitätsverlust (LOS) erfasst und/oder angezeigt wird, wenn

- der Betrag einer partiellen Ableitung einer Netzspannung nach der eingespeisten Wirkleistung einen vorbestimmten Wirkleistungsgrenzwert überschreitet,
- der Betrag einer partiellen Ableitung einer Netzspannung nach der eingespeisten Blindleistung einen vorbestimmten Blindleistungsgrenzwert überschreitet,
- bei Zerlegung einer dreiphasigen Spannung des Versorgungsnetzes (4) nach der Methode der symmetrischen Komponenten, der Betrag einer Mitspannungskomponente größer ist als ein Mittspannungsgrenzwert,
- bei Zerlegung einer dreiphasigen Spannung des Versorgungsnetzes nach der Methode der symmetrischen Komponenten, der Betrag einer Gegenspannungskomponente größer oder kleiner ist als ein Gegenspannungsgrenzwert und/oder
- der Betrag einer Differenz zwischen einer Referenzfrequenz und einer nominalen Frequenz einen vorbestimmten Frequenzgrenzwert dem Betrag nach überschreitet.

**8.** Verfahren nach einem der vorstehenden Ansprüche,
**dadurch gekennzeichnet, dass**
der Erzeuger (1) bei einem Kurzschlussstromverhältnis kleiner als 6, vorzugsweise kleiner als 4 und insbesondere kleiner als 2 gesteuert wird.

**9.** Verfahren nach einem der vorstehenden Ansprüche,
**dadurch gekennzeichnet, dass**
ein bzw. der Arbeitspunkt des Erzeugers (1) mit einer vorbestimmten Stabilitätsreserve zu einer bzw. der Stabilitätsgrenze (202) gewählt wird, wobei insbesondere die Stabilitätsreserve zur Stabilitätsgrenze (202)

- eine kleinste Differenz zwischen eingespeister Blindleistung (Q) und Blindleistung der Stabilitätsgrenze (202),
- eine kleinste Differenz zwischen eingespeister Wirkleistung (P) und Wirkleistung der Stabilitätsgrenze (202) oder
- eine kleinste Differenz zwischen der Spannung (V) am Netzanschlusspunkt und der Spannung der Stabilitätsgrenze,

ist oder abhängig von wenigstens einer dieser Differenzen berechnet wird, insbesondere aus wenigstens einer dieser Differenzen berechnet wird.

**10.** Verfahren nach Anspruch 9,
**dadurch gekennzeichnet, dass**
die Stabilitätsreserve zur Stabilitätsgrenze (202) definiert wird als Wurzel der Summe

- des Quadrates einer normierten kleinsten Differenz zwischen eingespeister Blindleistung (Q) und Blindleistung der Stabilitätsgrenze (202),
- des Quadrates einer normierten kleinsten Differenz zwischen eingespeister Wirkleistung (P) und Wirkleistung der Stabilitätsgrenze (202) und
- des Quadrates einer normierten kleinsten Differenz zwischen der Spannung (V) am Netzanschlusspunkt (2) und der Spannung der Stabilitätsgrenze (202),

wobei die Blindleistung (Q) und die Wirkleistung (P) jeweils auf die Kurzschlussleistung ($S_{cr}$) des Versorgungsnetzes (4) am Netzanschlusspunkt normiert sind und die Spannung am Netzanschlusspunkt (2) auf die Nennspannung (VN) des Versorgungsnetzes (4) am Netzanschlusspunkt (2) normiert ist, und der Abstand kleiner als 0,2, insbesondere kleiner als 0,1 ist.

**11.** Verfahren nach einem der vorstehenden Ansprüche,
**dadurch gekennzeichnet, dass**
ein bzw. die Stabilitätsreserve des aktuellen Arbeitspunktes von der Stabilitätsgrenze beobachtet wird und insbesondere der Arbeitspunkt verändert wird, wenn sich die Stabilitätsreserve zur Stabilitätsgrenze verringert.

**12.** Windenergieanlage (1), umfassend

- einen elektrischen Generator (6) mit einem aerodynamischen Rotor (106), zum Erzeugen elektrischer Energie aus Wind und
- eine Frequenzumrichtervorrichtung (16), insbesondere einen mit einem Gleichrichter (8) gekoppelten Wechselrichter (16) zum Einspeisen der elektrischen Energie in das Versorgungsnetz (4),

wobei die Windenergieanlage nach einem Verfahren der vorstehenden Ansprüche gesteuert wird.

13. Windenergieanlage (1) nach Anspruch 12,
**dadurch gekennzeichnet, dass**
die Windenergieanlage (1) an den Netzanschlusspunkt (2) angeschlossen ist, und elektrische Energie an diesem Netzanschlusspunkt (2) in das Versorgungsnetz (4) einspeist, wobei an diesem Netzanschlusspunkt das Kurzschlussstromverhältnis ($S_{cr}$) kleiner als 10, vorzugsweise kleiner als 6 und insbesondere kleiner als 4 ist.

14. Verfahren nach einem der vorstehenden Ansprüche,
**dadurch gekennzeichnet, dass**
abhängig von

- der wenigstens einen aufgenommenen Netzeigenschaft und/oder
- wenigstens einem Netzzustand und/oder
- einer Abweichung der Steuerung von einem vorgegebenen Arbeitspunkt ein Stabilitätsverlust und/oder ein drohender Stabilitätsverlust identifiziert wird.

15. Verfahren nach Anspruch 14,
**dadurch gekennzeichnet, dass**
der Erzeuger (1) ein Windpark mit mehreren Windenergieanlagen (1) ist und die Identifikation eines Stabilitätsverlustes oder eines drohenden Stabilitätsverlustes für jede einzelne Windenergieanlage (1) oder wenigstens eine Untergruppe der Windenergieanlage des Parks individuell erfolgt.

Fig. 1

**Fig. 2**

Fig. 3

Fig. 5

Fig. 4

Fig. 6

Spannungssensitivität [pu/MW] am PCC abhängig der Leistung der Micro-WEA

Fig. 7

Spannungssensitivität [pu/MVAr] am PCC abhängig der Leistung der Micro-WEA

Fig. 8

Fig. 9

Europäisches Patentamt
European Patent Office
Office européen des brevets

# EUROPÄISCHER RECHERCHENBERICHT

Nummer der Anmeldung

EP 19 18 8000

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2009/083448 A2 (VESTAS WIND SYS AS [DK]; BECH JOHN [DK]; NIELSEN PETER [DK]; KJAER PHI) 9. Juli 2009 (2009-07-09) | 1-3,9, 10,12,15 | INV. H02J3/24 F03D9/00 |
| Y | * das ganze Dokument * | 4-8,11, 13,14 | F03D7/02 F03D9/25 |
| | ----- | | |
| X | EP 1 909 370 A1 (ABB RESEARCH LTD [CH]) 9. April 2008 (2008-04-09) | 1 | |
| Y | * Absätze [0003], [0007] - [0009], [0012] - [0014] * <br> * Absätze [0028], [0029] * | 5,7,11, 14 | |
| | ----- | | |
| X | EP 2 325 968 A1 (ABB RESEARCH LTD [CH]) 25. Mai 2011 (2011-05-25) | 1 | |
| Y | * Absätze [0016] - [0018], [0033] * <br> * Abbildungen 1,2,4 * | 5,7,11, 14 | |
| | ----- | | |
| Y | EP 2 299 555 A1 (ABB RESEARCH LTD [CH]) 23. März 2011 (2011-03-23) <br> * Absätze [0006], [0014] - [0016] * <br> * Abbildungen 1,4 * | 4,6,7, 11,14 | |
| | ----- | | RECHERCHIERTE SACHGEBIETE (IPC) |
| X | EP 1 841 037 A2 (GEN ELECTRIC [US]) 3. Oktober 2007 (2007-10-03) <br> * Absätze [0004], [0014], [0024] - [0028] * <br> * Absatz [0043] * <br> * Abbildungen 1-6 * | 1 | H02J F03D |
| | ----- | | |
| Y | US 2003/057924 A1 (SHIMOMURA MASARU [JP] ET AL) 27. März 2003 (2003-03-27) <br> * Absätze [0001] - [0006] * <br> * Abbildung 6 * | 4,6 | |
| | ----- | | |
| Y | US 2007/055408 A1 (DELMERICO ROBERT W [US] ET AL DELMERICO ROBERT WILLIAM [US] ET AL) 8. März 2007 (2007-03-08) <br> * Absätze [0001] - [0007] * | 8,13 | |
| | ----- | | |

Der vorliegende Recherchenbericht wurde für alle Patentansprüche erstellt

| Recherchenort | Abschlußdatum der Recherche | Prüfer |
|---|---|---|
| München | 5. Dezember 2019 | Krasser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 19 18 8000

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-12-2019

| Im Recherchenbericht angeführtes Patentdokument | Datum der Veröffentlichung | Mitglied(er) der Patentfamilie | | Datum der Veröffentlichung |
|---|---|---|---|---|
| WO 2009083448 A2 | 09-07-2009 | AU | 2008342717 A1 | 09-07-2009 |
| | | BR | PI0819413 A2 | 05-05-2015 |
| | | CN | 101911424 A | 08-12-2010 |
| | | EP | 2227847 A2 | 15-09-2010 |
| | | ES | 2449386 T3 | 19-03-2014 |
| | | US | 2011043186 A1 | 24-02-2011 |
| | | WO | 2009083448 A2 | 09-07-2009 |
| EP 1909370 A1 | 09-04-2008 | AT | 474361 T | 15-07-2010 |
| | | CN | 101548447 A | 30-09-2009 |
| | | EP | 1909370 A1 | 09-04-2008 |
| | | EP | 2070173 A1 | 17-06-2009 |
| | | US | 2010094477 A1 | 15-04-2010 |
| | | WO | 2008040713 A1 | 10-04-2008 |
| EP 2325968 A1 | 25-05-2011 | EP | 2325968 A1 | 25-05-2011 |
| | | WO | 2011061153 A2 | 26-05-2011 |
| EP 2299555 A1 | 23-03-2011 | EP | 2299555 A1 | 23-03-2011 |
| | | WO | 2011033044 A2 | 24-03-2011 |
| EP 1841037 A2 | 03-10-2007 | CN | 101047316 A | 03-10-2007 |
| | | DK | 1841037 T3 | 15-01-2018 |
| | | EP | 1841037 A2 | 03-10-2007 |
| | | ES | 2654522 T3 | 14-02-2018 |
| | | US | 2007233406 A1 | 04-10-2007 |
| US 2003057924 A1 | 27-03-2003 | JP | 3795783 B2 | 12-07-2006 |
| | | JP | 2003102129 A | 04-04-2003 |
| | | US | 2003057924 A1 | 27-03-2003 |
| US 2007055408 A1 | 08-03-2007 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6891281 B
- US 7462946 B
- US 6965174 B
- US 6984898 B
- DE 102011053237 A1
- WO 2010060903 A1
- US 20100148508 A1
- DE 102007044601 A1
- DE 102007018888 A1
- US 20100237834 A1

**In der Beschreibung aufgeführte Nicht-Patentliteratur**

- **V. DIEDRICHS et al.** Loss of (Angle) Stability of Wind Power Plants. *10th International Workshop on Large-Scale Integration of Wind Power into Power Systems as well as on Transmission Networks for Offshore Wind Farms,* 25. Oktober 2011